**Europäisches Patentamt**

**European Patent Office**

**Office européen des brevets**

(19)

(11) **EP 1 531 579 A2**

(12) # EUROPEAN PATENT APPLICATION

(43) Date of publication:
**18.05.2005 Bulletin 2005/20**

(51) Int Cl.$^7$: **H04L 9/30**

(21) Application number: **04256964.0**

(22) Date of filing: **10.11.2004**

| | |
|---|---|
| (84) Designated Contracting States:<br>**AT BE BG CH CY CZ DE DK EE ES FI FR GB GR HU IE IS IT LI LU MC NL PL PT RO SE SI SK TR**<br>Designated Extension States:<br>**AL HR LT LV MK YU** | (72) Inventors:<br>• **Ono, Takatoshi**<br>  **Ama-gun, Aichi 490-1111 (JP)**<br>• **Matsuzaki, Natsume**<br>  **Mino-shi, Osaka 562-0024 (JP)**<br>• **Futa, Yuichi**<br>  **Osaka-shi, Osaka 534-0002 (JP)** |
| (30) Priority: **12.11.2003 JP 2003382191** | |
| (71) Applicant: **MATSUSHITA ELECTRIC INDUSTRIAL CO., LTD.**<br>**Kadoma-shi, Osaka 571-8501 (JP)** | (74) Representative: **Crawford, Andrew Birkby et al**<br>**A.A. Thornton & Co.,**<br>**235 High Holborn**<br>**London WC1V 7LE (GB)** |

(54) **RSA public key generation apparatus, RSA decryption apparatus, and RSA signature apparatus**

(57)     An RSA decryption apparatus that is used in an IC card or the like counters a differential fault attack. The RSA decryption apparatus computes at high speed a public key used in data verification, without having to obtain the public key from an external source. The RSA decryption apparatus includes a remainder computation unit 412 that calculates $d_p = d$ mod $(p\text{-}1)$, and an inverse computation unit 414 that finds an inverse of $d_p$ over a residue field with $p\text{-}1$ as a modulus. The RSA decryption apparatus verifies a deciphertext with use of the inverse of $d_p$ as the public key. The reduced bit count in inverse computation compared to if the inverse of d is found as the public key increases computing speed.

FIG.4

**Description**

This application is based on application No. 2003-382191 filed in Japan, the content of which is hereby incorporated by reference.

BACKGROUND OF THE INVENTION

(1) Field of the Invention

The present invention relates to an information security technique that uses an RSA cryptography technique, which is one type of public key encryption algorithm.

(2) Description of the Related Art

Public key cryptography has conventionally been known as a method for realizing confidentiality of information, authentication of information, etc.

According to public key cryptography, a pair of a private key and a public key is generated. The private key is held exclusively by the user and the public key is made public. Encryption is performed using the public key and decryption is performed using the private key. For example, when transmitting a message in an encrypted form, the transmitter of the message encrypts the message using the public key of the receiver of the message. Only the receiver of the message, who has the private key, is able to decrypt the encrypted message using the private key.

Despite its large amount of computation processing, public key cryptography, which does not require a private key to be shared by a plurality of uses, is often employed in such application that require high security. Typical examples of public key cryptography include RSA cryptography and elliptic curve cryptography.

While an advantage of the described public key encryption is that secret information can be transmitted without being exposed to a third party, and problem occurs when an IC card performs encryption processing. As described in Japanese PatentApplicationPublicationNo. 2002-261751, thereisathreat of a malicious third party intentionally causing an error using an abnormal clock, abnormal power voltage, an abnormal electromagnetic wave, an abnormal temperature, or the like, to extract the key used in encryption or the secret information. This kind of attack is called a differential fault attack (DFA) .

To counter this problem, Japanese Patent Application Publication No. H11-8616 discloses an technique to deal with a DFA. With this technique, high-speed processing is performed according to Chinese Remainder Theorem (CRT) using a prime factor of a modulus n to calculate an exponential remainder for creating a digital signature. Data generated in a calculation procedure according to CRT is stored, and, at the same time, an error detection code for the data is also calculated and stored. When creating a digital signature, the error detection code for the data is recalculated, and the stored error detection code is compared with the recalculated error detection code to detect if there is an error in the data. An error status is returned when an error is detected. This heightens security against a DFA in an IC card that performs signature creation processing using CRT.

While such a conventional technique heightens security with respect to differential fault attacks on IC cards that use Chinese Remainder Theorem in signature generation processing, there are demands to heighten the speed at which information security processing is performed.

SUMMARY OF THE INVENTION

In response to such demands, the object of the present invention is to provide an RSA public key generation apparatus, and RSA decryption apparatus, an RSA signature generation apparatus, a method, and a program that heighten the speed at which information security processing is performed.

In order to achieve the stated object, the present invention is an RSA public key generation apparatus that newly generates a public key e' from an RSA cryptography private key d, including: an obtaining unit operable to obtain the private key d and a prime p, the private key d being an inverse of a public key e over a residue field with $lcm$ as a modulus, the prime $p$ differing from a prime $q$, $lcm$ being a least common multiple of $p$-1 and $q$-1, and the public key $e$ being mutually relatively prime with $lcm$ and satisfying an expression $p$-1>$e$; a remainder computation unit operable to calculate, using the obtained private key $d$ and the obtained prime $p$, a remainder $d_p$ of the private key $d$ with a prime $p$-1 as a modulus; and an inverse computation unit operable to calculate, as the new public key $e'$, using the calculated remainder $d_p$ and the obtained prime $p$, an inverse of the remainder $d_p$ over a residue field with the prime $p$-1 as a modulus.

According to the stated structure, the remainder $d_p$, which is the target of inverse calculation to find the public key, is a value whose bit length is approximately half that of the private key $d$. Therefore, the time taken for the inverse computation unit to perform inverse computation is greatly reduced in comparison to conventional methods.

Furthermore, the present invention is an RSA decryption apparatus that decrypts a ciphertext generated according to RSA cryptography, including: a public key obtaining unit operable to obtain the public key $e'$ from the above-described RSA public key generation apparatus; a ciphertext obtaining unit operable to obtain a ciphertext $C$, the ciphertext $C$ having been generated by RSA encrypting a plaintext $M$ according to RSA cryptography with use of the public key $e$; an RSA decryption unit operable to RSA decrypt the obtained ciphertext $C$ with use of the private key $d$, thereby generating a deciphertext $D$; a re-encryption unit operable to RSA encrypt the generated deciphertext $D$ using the obtained public key $e'$, thereby generating a re-ciphertext $C'$; a comparison unit operable to compare the obtained ciphertext $C$ with the generated re-ciphertext $C'$ to determine whether the ciphertext $C$ and the re-ciphertext $C'$ are identical; and an output unit operable to output the generated deciphertext $D$ when the ciphertext $C$ and the re-ciphertext $C'$ are determined to be identical.

According to the stated structure, the generated deciphertext is output when the comparison unit determines the ciphertext $C$ and the re-ciphertext $C'$ to be identical. This provides resistance against differential fault attacks.

Here, the RSA decryption unit may obtain the remainder $d_p$ from the above-described RSA public key generation apparatus, and RSA decrypt the obtained ciphertext $C$ according to Chinese Remainder Theorem with use of the obtained remainder $d_p$, thereby generating the deciphertext $D$.

According to the stated structure, the remainder $d_p$, which is the target of inverse computation to find the pubic key, can be used as is in the RSA decryption process that uses a Chinese Remainder Theorem algorithm. Therefore, the time taken for RSA decryption and the like can be reduced.

Furthermore, the present invention is an RSA signature apparatus that generates a signature by applying a signature method to a plaintext according to RSA cryptography, including: a public key obtaining unit operable to obtain the public key e' from the above-described RSA public key generation apparatus; a signature generation unit operable to apply an RSA signature to a plaintext $M$ with use of the private key $d$, thereby generating a signature $S$; a recovery unit operable to apply RSA signature recovery to the signature $S$ with use of the obtained public key $e'$, thereby generating a deciphertext $D$; a comparison unit operable to compare the plaintext $M$ with the generated deciphertext $D$ to determine whether the plaintext $M$ and the deciphertext $D$ are identical; and an output unit operable to output the generated signature $S$ when the plaintext $M$ and the deciphertext $D$ are determined to be identical.

According to the stated structure, the generated deciphertext is output when the comparison unit determines the plaintext $M$ and the deciphertext $D$ to be identical. This provides resistance against differential fault attacks.

Here, the signature generation unit may obtain the remainder $d_p$ from the above-described RSA public key generation apparatus, and apply the RSA signature to the plaintext $M$ according to Chinese Remainder Theorem with use of the obtained remainder $d_p$, thereby generating the signature $S$.

According to the stated structure, the remainder $d_p$, which is the target of inverse computation to find the pubic key, can be used as is in the RSA signature process that uses a Chinese Remainder Theorem algorithm. Therefore, the time taken for RSA signature can be reduced.

BRIEF DESCRIPTION OF THE DRAWINGS

These and other objects, advantages and features of the invention will become apparent from the following description thereof taken in conjunction with the accompanying drawings which illustrate a specific embodiment of the invention.

In the drawings:

FIG. 1 shows the structure of a secret communication system 10;
FIG. 2 is a block diagram showing the structure of a register apparatus 100;
FIG. 3 is a block diagram showing the structure of an IC card 300;
FIG. 4 is a flowchart showing an outline of overall operations by the register apparatus 100 and the IC card 300;
FIG. 5 is a flowchart showing operations by the register apparatus 100 for authenticating the IC card 300, which continues in FIG. 6:
FIG. 6 is a flowchart showing operations by the register-apparatus 100 for authenticating the IC card 300 , which continues from FIG. 5:
FIG. 7 is a flowchart showing operations by the IC card 300 for authenticating the register apparatus 100;
FIG. 8 is a flowchart showing operations for transfer of a session key;
FIG. 9 is a flowchart showing operations for secret communication of points;
FIG, 10 shows the structure of an RSA secret communication system 20 as a second embodiment;
FIG. 11 is a flowchart showing operations by an RSA decryption apparatus 400 for RSA decryption;
FIG. 12 shows the structure of an RSA secret communication system 30 as a third embodiment; and
FIG. 13 is a flowchart showing operations of the RSA secret communication system 30.

DESCRIPTION OF THE PREFERRED EMBODIMENTS

1. First Embodiment

The following describes a secret communication system 10 as a first embodiment of the present invention.

1. 1 Structure of the Secret Communication System 10

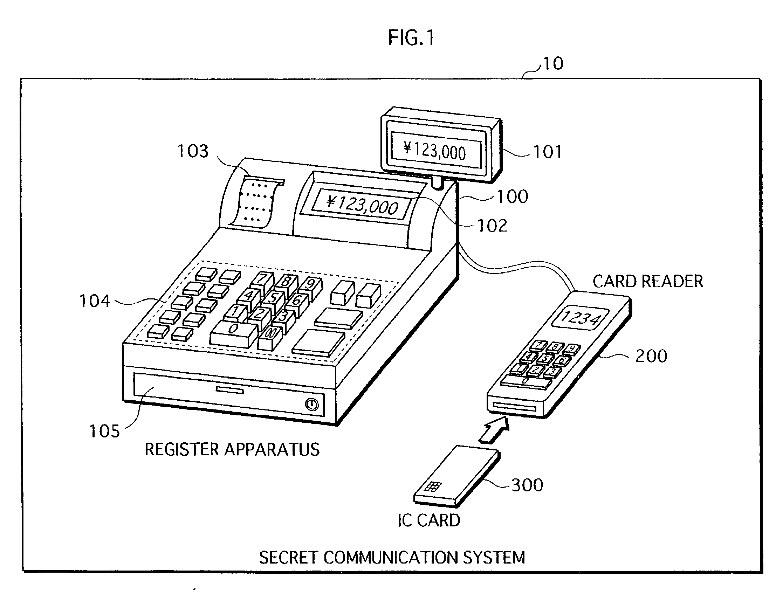

The secret communication system 10, as shown in FIG. 1, includes a register apparatus 100 and an IC card 300.

The register apparatus 100, which is located in a retail establishment, is operated by a sales assistant of the retail establishment, and issues one or more incentive points in accordance with a purchase amount of goods purchased by a user. The register apparatus 100 encrypts the issued points, thereby generating encrypted points, and outputs the generated encrypted points to the user's IC card 300 via a card reader 200 which is connected to the register apparatus 100.

The IC card 300 receives the encrypted points, decrypts the encrypted points to generate decrypted points, and stores the generated decrypted points.

The user is able to use the decrypted points stored in the IC card 300 toward payment next time the user purchases a product.

1.2 Generation of public key e and private key d for the IC card 300

A key generation apparatus (not illustrated) generates a public key $e$ and a private key $d$ for the IC card 300 in the following manner.

(a) The key generation apparatus selects large, arbitrary primes $p$ and $q$, which are mutually different in value, and calculates the product $n$ thereof. $n=p*q$

(b) The key generation apparatus calculates the least common multiple $L$ of $(p-1)$ and $(q-1)$, and selects an arbitrary integer $e$ (public key) that is mutually relatively prime with the least common multiple, $L$ and smaller than the least common multiple $L$.

$$L=LCM((p-1),(q-1))$$

$$GCD(e,L)=1$$

$$1<e<L$$

Here, $LCM(X, Y)$ shows the least common multiple of a number $X$ and a number $Y,$ and $GCD(X, Y)$ shows the greatest common divisor of the number $X$ and the number $Y$. LCM is an abbreviation of least common multiple, and $GCD$ is an abbreviation of greatest common divisor.

(c) The key generation apparatus solves the following expression based on the public key e and the least common multiple $L$ found at (b).

$$ed=1 \quad (\mathrm{mod}\ L)$$

The key generation apparatus notifies the register apparatus 100 of the prime $p$, the prime $q$, and the public key $e$ in advance. The key generation apparatus also notifies the IC card 300 of the prime $p$, the prime $q$, and the private key $d$ in advance.

The public key $PK$ and the private key $SK$ are generated in the same manner for the register apparatus 100. The private key $SK$ is notified to the register apparatus 100 in advance, and the public key $PK$ is notified to the IC card 300 in advance.

1.3 Structure of the register apparatus 100

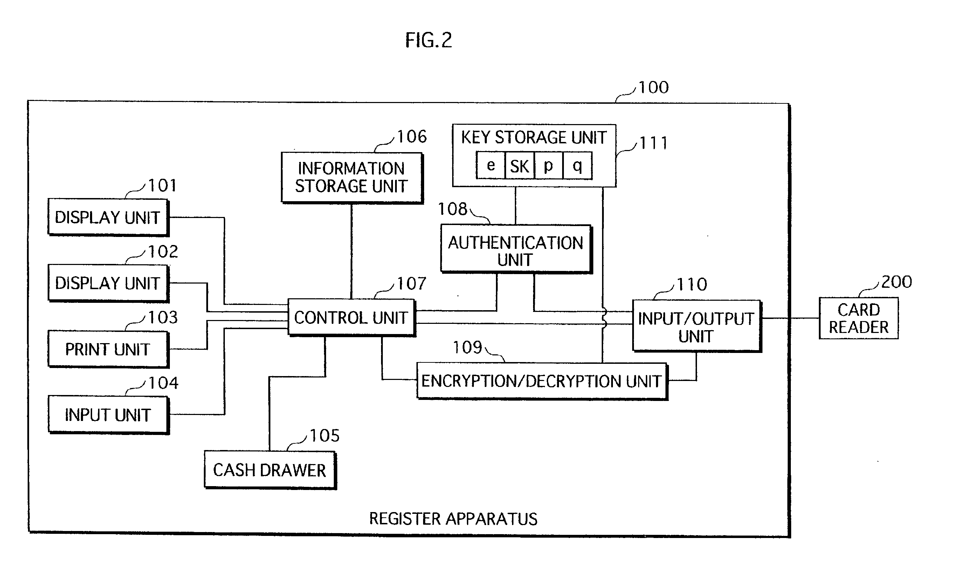

The register apparatus 100, as shown in FIG. 2, is composed of a display unit 101, a display unit 102, a print unit 103, an input unit 104, a cash drawer 105, an information storage unit 106, a control unit 107, an authentication unit 108, an encryption/decryption unit 109, an input/output unit 110, and a key storage unit 111. Furthermore, the card reader 200 is connected to the input/output unit 110 of the register apparatus 100.

The register apparatus 100 is a cash register apparatus whose functions include receiving and storing payment from a user. The register apparatus 100 has a further function of issuing one or more incentive points in accordance with a purchase amount of a product purchased by the user, encrypting the issued points to generate encrypted points, and outputting the generated encrypted points to the user's IC card 300.

The register apparatus 100 is, specifically, a computer system that includes amicroprocessor, a ROM, anda RAM. Computer programs are stored in the ROM, and the register apparatus 100 achieves its functions by the microprocessor operating according to the computer programs.

(1) Key storage unit 111

The key storage unit 111 is un-accessible by an external apparatus, and, as shown in FIG. 2, stores the public key e of the IC card 300, the prime p, the prime q, and the private key *SK* of the register apparatus 100.

The public key e is the public key of the IC card 300, and is generated according to a key generation algorithm that conforms to RSA public key cryptography. The public key e is stored in a data area of 1024 bits in length.

The prime $p$ and the prime $q$ are arbitrary primes that are mutually different in value, and are stored in respective data areas of 512 bits in length. Here, as one example,

$$p=$$

d32737e7 267ffe13 41b2d5c0 d150a81b 586fb313 2bed2f8d 5262864a

9cb9f30a f38be448 598d413a 172efb80 2c21acf1 c11c520c 2f26a471

dcad212e ac7ca39d,

and

$$q=$$

cc8853d1 d54da630 fac004f4 71f281c7 b8982d82 24a490ed beb33d3e

3d5cc93c 4765703d 1dd79164 2f1f116a 0dd852be 2419b2af 72bfe9a0

30e860b0 288b5d77.

Note that the above notation is hexadecimal, and is shown divided into groups of eight digits for ease of comprehension.

The private key *SK* is a private key generated with a key generation algorithm that conforms to RSA public key cryptography. The private key *SK* is stored in a data area of 1024 bits in length.

(2) Information storage unit 106

The information storage unit 106 includes storage areas for storing information relating to purchases of products by the user, such as a user ID for identifying the user, a user purchase amount, a purchase date, and issued points.

(3) Authentication unit 108

When the IC card 300 is mounted in the card reader 200, the authentication unit 108 performs mutual device authentication with the IC card 300 via the input/output unit 110 and the card reader 200. Here, a challenge-response method is used for the device authentication.

<Authentication of the IC card 300 by the register apparatus 100>

The authentication unit 108 generates a random number $R_1$, and outputs the generated random number $R_1$

to the IC card 300 via the input/output unit 110 and the card reader 200.

Furthermore, the authentication unit 108 receives signature data $S_1$ from the IC card 300 via the card reader 200 and the input/output unit 110, and reads the IC card 300 public key $e$, the prime $p$, and the prime $q$ from the key storage unit 111. Next, the authentication unit 108 applies a hash function *Hash* to the generated random number $R_1$, thereby generating a hash value $H_2$.

$$H_2 = Hash \ (R_1)$$

Here, *Hash* $(R_1)$ indicates a value obtained by applying a hash function *Hash* to a random number $R_1$ . One example of the hash function *Hash* is SHA-1.

Next, the authentication unit 108 calculates $n = p*q$, calculates $S_1^e$ (mod $n$), and compares the generated hash value $H_2$ with the obtained $S_1^e$ (mod $n$) . The authentication unit 108 considers authentication to have succeeded if the two are identical, and authentication to have failed if the two are not identical.

When authentication is successful, the authentication unit 108 notifies the control unit 107 of information indicating device authentication success. When authentication fails, the authentication unit 108 notifies the control unit 107 of information indicating device authentication failure.

When device authentication fails, the register apparatus 100 does not perform subsequent transmission and reception of information with the IC card 300.

<Authentication of the register apparatus 100 by the IC card 300>

The authentication unit 108 receives the random number $R_2$ from the IC card 300 via the card reader 200 and the input/output unit 110, reads the private key *SK*, the prime $p$, and the prime $q$ from the key storage unit 111, and applies a hash function *Hash* to the received random number $R_2$, thereby calculating a hash value $H_3$.

$$H_3 = Hash(R_2)$$

Next, the authentication unit 108 calculates $n=p*q$, calculates signature data $S_2 = (H_3)^{SK}$(mod $n$), and outputs the obtained signature data $S_2$ to the IC card 300 via the input/output unit 110 and the card reader 200.

(4) Input/output unit 110 and card reader 200

The input/output unit 110 performs two-way transmission and reception of information between the control unit 107 and the card reader 200 under the control of the control unit 107, and between the authentication unit 108 and the card reader 200 under the control of the authentication unit 108.

The card reader 200 performs transmission and reception of information between the IC card 300 and the input/output unit 110.

(5) Encryption/decryption unit 109

<Session key output>

The encryption/decryption unit 109 generates a random number, and uses the random number as a session key *M*. Next, the encryption/decryption unit 109 reads the prime $p$, the prime $q$ and the public key $e$ from the key storage unit 111, calculates integer $n = p*q,$ and calculates an encryption session key $C_1$ according to the following expression using the session key *M*, the integer $n$, and the public key $e$.

Encryption session key

$$C_1 = M^e \text{(mod } n)$$

Next, the encryption/decryption unit 109 outputs the obtained encryption session key $C_1$ to the IC card 300 via the input/output unit 110 and the card reader 200.

<Point output>

The encryption/decryption unit 109 receives one or more points *Pt* from the control unit 107, and applies an encryption algorithm $E_1$ to the received points *Pt* with use of the generated session key *M,* thereby generating encrypted points *Et*.

Encrypted points

$$Et = E_1 \text{ (session key } M, \text{ points } Pt)$$

Here, $E(A,B)$ shows a ciphertext obtained by applying an encryption algorithm $E$ to a plaintext $B$ with use of a key $A$. As one example, the encryption algorithm $E_1$ may conform to the common key cryptography method DES (Data Encryption Standard).

Next, the encryption/decryption unit 109 outputs the encrypted points Et to the IC card reader 200 via the input/output 110 and the card reader 200.

(6) Control unit 107

According to an operation by the retail establishment sales assistant, the control unit 107 generates one or more incentive points Pt in accordance with the purchase amount of goods purchased by the user, and outputs the generated points Pt to the encryption/decryption unit 109.

The control unit 107 also controls other compositional elements of the register apparatus 100.

(7) Input unit 104, display unit 101, display unit 102, print unit 103 and cash drawer 105

The input unit 104 receives input information from an operator of the register apparatus 100, and outputs the received input information to the control unit 107. Furthermore, the display unit 101 and the display unit 102 receive information to be displayed from the control unit 107 , and display the received information.

The print unit 103 prints various information under the control of the control unit 107.

The cash drawer 105 stores bills, coins and the like.

1.4 Structure of the IC card 300

The IC card 300 is a thin board-shape with a length of approximately 85 mm, a width of approximately 54 mm, and a thickness of approximately 0.76 mm, and is made from resin. The IC card 300 has a contact terminal on an outer surface thereof, and an internal system LSI (Large Scale Integrated circuit) 320.

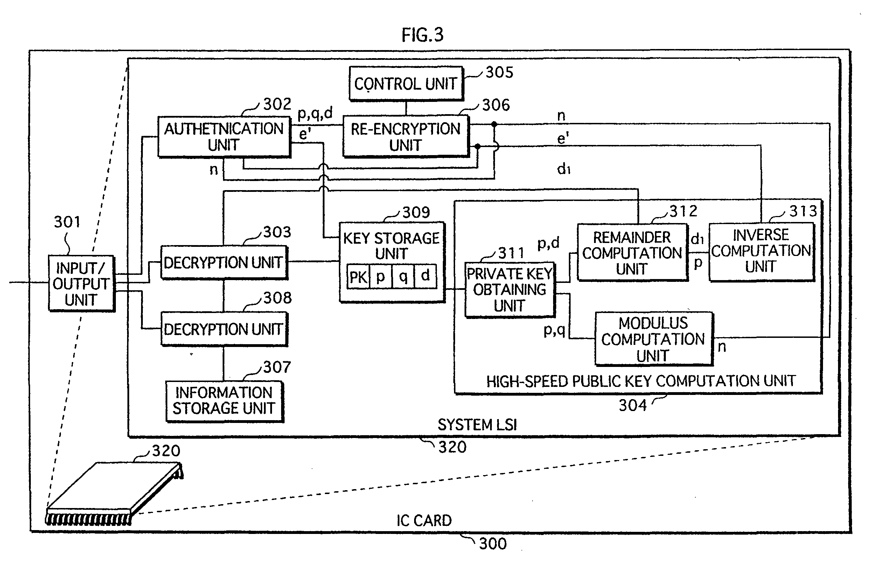

The IC card 300, as shown in FIG. 3, is composed of an input/output unit 301, and authentication unit 302, a decryption unit 303, a high-speed public key computation unit 304, a control unit 305, a re-encryption unit 306, an information storage unit 307, a decryption unit 308, and a key storage unit 309. The authentication unit 302, the decryption unit 303, the high-speed public key computation unit 304, the control unit 305, the re-encryption unit 306, the information storage unit 307, the decryption unit 308, and the key storage unit 309 form the system LSI.

The system LSI 320 is a multifunctional LSI that is manufactured by integrating a plurality of components onto one chip. Specifically, the LSI 320 is a computer system that includes a microprocessor, a ROM, and a RAM. Computer programs are stored in the RAM, and the LSI 300 achieves part of its functions by the microprocessor operating according to the programs.

(1) Key storage unit 309

The key storage unit 309, as shown in FIG. 3, stores in advance a public key *PK of* the register apparatus 100, the prime *p*, the prime *q*, and a private key *d* of the IC card 300.

The public key *PK* is the private key of the register apparatus 100, and has been generated according to a key generation algorithm that conforms to the RSA publ ic cryptography method. The public key *PK* is stored in a data area that is 1024 bits in length.

The prime *p* and the prime *q* are as described earlier, and are stored in respective data areas of 512 bits in length.

The private key d is the private key of the IC card 300, and has been generated according to a key generation algorithm of that conforms to RSA public key cryptology. The private key d is stored in a data area that is 1024 bits in length.

(2) High-speed public key computation unit 304

The high-speed public key computation unit 304, as shown in FIG. 3, is composed of a private key obtaining unit 311, a remainder computation unit 312, an inverse computation unit 313, and a modulus computation unit 314.
The private key obtaining unit 311 reads the private key $d$, the prime $p$, and the prime $q$ from the key storage unit 309, and outputs the read private key $d$, prime $p$, and prime $q$ to the remainder computation unit 312. The private key obtaining unit 311 also outputs the read prime $p$ and prime $q$ to the modulus computation unit 314.
The remainder computation unit 312 receives the private key $d$, the prime $p$, and the prime $q$ from the private key obtaining unit 311, and using the received private key d and prime p, calculates

$$d_1 = d(mod\ p\text{-}1)$$

and outputs the obtained number $d_1$ and the prime $p$ to the inverse computation unit 313. The remainder computation unit 312 also outputs the number $d_1$ to the decryption unit 303.
The inverse computation unit 313 receives the number $d_1$ and the prime $p$ from the remainder calculation unit 312, and calculates a public key $e'$ with use of the received number $d_1$ and prime $p$, according to the following expression.

$$e' = d_1^{-1}(mod\ p\text{-}1)$$

Next, the inverse computation unit 313 outputs the obtained public key $e'$ to the re-encryption unit 306 and the authentication unit 302.
The modulus computation unit 314 receives the prime $p$ and the prime $q$ from the private key obtaining unit 311, calculates an integer $n = p*q$ with use of the received prime $p$ and prime $q$, and outputs the obtained integer $n$ to the authentication unit 302 and the re-encryption unit 306.

(3) Authentication unit 302

<Authentication of the IC card 300 by the register apparatus 100>

The authentication unit 302 receives the random number $R_1$ from the register apparatus 100 via the card reader 200 and the input/output unit 301, reads the prime $p$, the prime $q$, and the private key d from the key storage unit 309, receives the integer $n$ from the modulus computation unit 314, and calculates a hash value $H_1$ with use of the received random number $R_1$, according to the following expression.

$$H_1 = Hash\ (R_1)$$

Next, the authentication unit 302 calculates a digital signature data $S_1$ by calculating the following expressions in the stated order.

$$a = p^{-1} \quad (mod\ q)$$

$$y_1 = H_1 \quad (mod\ p)$$

$$y_2 = H_1 \quad (mod\ q)$$

$$d_2 = d \quad (mod\ q\text{-}1)$$

$$x_1 = y_1^{d1} \quad (mod\ p)$$

$$x_2 = y_2{}^{d2} \qquad (\text{mod } q)$$

$$s_1 = \{a(x_2 - x_1)\,(\text{ mod } q)\}\,p + x_1$$

Next, the authentication unit 302 outputs the obtained signature data signature data $S_1$ to the re-encryption unit 306, and receives $s_1{}^{e'}$ (mod $n$) from the re-encryption unit 306.

The authentication unit 302 then judges whether the hash value $H_1$ and $s_1{}^{e'}$ (mod $n$) are identical, and if the two are not identical, judges that an error has occurred, and notifies the control unit 305 of error information that indicates occurrence of an error. The IC card 300 ceases subsequent operations.

When the two are identical, the authentication unit 302 outputs the generated signature data $S_1$ to the register apparatus 100 via the input/output unit 301 and the card reader 200.

<Authentication of the register apparatus 100 by the IC card 300>

The authentication unit 302 generates a random number $R_2$, and outputs the generated random number $R_2$ to the register apparatus 100 via the input/output unit 301 and the card reader 200.

Next, the authentication unit 302 receives the signature data $S_2$ from register apparatus 100 via the card reader 200 and the input/output unit 301, reads the public key $PK$ of the register apparatus 100, the prime p and the prime q from the key storage unit 309, calculates an integer $n = p*q$, and calculates a hash value $H_4$ with use of the generated random number $R_2$.

$$H_4 = Hash\,(R_2)$$

Next, the authentication unit 302 judges whether $S_2{}^{PK}$ (mod $n$) , and judges whether $H_4$ and $S_2\,PK$ (mod $n$) are identical. The authentication unit 302 considers authentication to have succeeded when the two are identical, and authentication to have failed when the two are not identical.

When authentication succeeds, the authentication unit 302 notifies the control unit 305 of information indicating device authentication success. When authentication fails, the authentication unit, 302 notifies the control unit 305 of information indicating device authentication failure.

When device authentication fails, the IC card 300 does not perform subsequent transmission and reception of information with the register apparatus 100.

(4) Re-encryption unit 306

The re-encryption unit 306 receives the public key e' from the inverse computation unit 313, receives the integer n from the modulus computation unit 314, and calculates the following expression.

$$s_1{}^{e'} (\text{mod } n)$$

Next, the re-encryption unit 306 outputs the obtained $s_1\,{}^{e'}$ (mod $n$) to the authentication unit 302.

(5) Control unit 305

The control unit 305 receives the error information, the information indicating that device authentication has succeeded, or the information indicating that device authentication has failed.

On receiving the error information, the control unit 305 instructs the other compositional elements of the IC card 300 to cease operations.

On receiving the information indicating that device authentication has failed, the control unit 305 instructs the other compositional elements of the IC card 300 to cease operations. On the other hand, on receiving the information indicating that device authentication has succeeded, the control unit 305 proceeds with subsequent operations.

(6) Decryption unit 303

The decryption unit 303 receives an encrypted session key $C_1$ from the register apparatus 100 via the card reader 200 and the input/output unit 301.

Next, the decryption unit 303 receives the prime $p$ and the prime $q$ from the key storage unit 309, receives the number $d_1$ from the remainder calculation unit 312, and calculates a decrypted session key $x$.

$$a = p^{-1} \quad (\text{mod } q)$$

$$y_1 = C_1 \quad (\text{mod } p)$$

$$y_2 = C_1 \quad (\text{mod } q)$$

$$d_2 = d \quad (\text{mod } q\text{-}1)$$

$$x_1 = y_1^{d1} \quad (\text{mod } p)$$

$$x_2 = y_2^{d2} \quad (\text{mod } q)$$

$$x = \{a(x_2 - x_1) \,(\text{mod } q)\} \, p + x_1$$

The decryption unit 303 then outputs the obtained decrypted session key x to the decryption unit 308.

(7) Decryption unit 308

The decryption unit 308 receives the encrypted points $Et$ from the register unit 100 via the card reader 200 and the input/output unit 301, receives the decrypted session key $x$ from the decryption unit 303, and applies a decryption algorithm $D_1$ to the received encrypted points $Et$, using the received session key $x$ as the key, thereby generating decrypted points $Dt$. The decryption unit 308 then writes the generated decrypted points $Dt$ to the information storage unit 307.

Here, the decryption algorithm $D_1$ conforms to the common key cryptography method DES, and is for decrypting a ciphertext generated according to the encryption algorithm $E_1$.

(8) Input/output unit 301

The input/output unit 301 performs reception and transmission of information between the register apparatus 100 and the other compositional elements of the IC card 300, via the card reader 200.

(9) Information storage unit 307

The information storage unit 307 includes an area for storing the decrypted points $Dt$.

1.5 Operations of the secret communication system 10

The following describes operations of the secret communication system 10.

(1) Overview of operations of the secret communication system 10

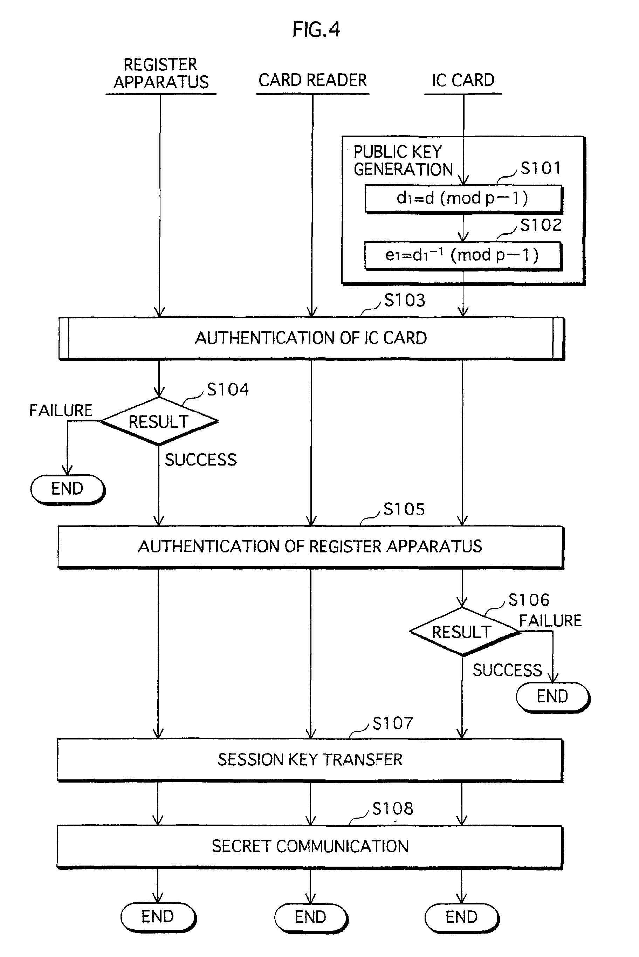

The following describes an overview of operations of the secret communication system 10, with use of the flowchart in FIG. 4.

The remainder computation unit 312 of the high-speed public key computation unit 304 of the IC card 300 calculates $d_1 = d$ (mod $p$-1) (step S101), and the inverse computation unit 313 calculates public key $e' = d_1^{-1}$ (mod $p$-1) (step S102).

Next, the register apparatus 100 attempts authentication of the IC card 300 (step S103), and if authentication fails (step S104), ends communication with the IC card 300. If authentication succeeds (step S104) , the register apparatus 100 continues communication with the IC card 300.

Next, the IC card 300 attempts authentication of the register apparatus 100 (step S105), and if authentication fails (step S106), ends communication with the register apparatus 100. If authentication succeeds (step S106), the IC card 300 continues communication with the register apparatus 100.

Next, the register apparatus 100 encrypts the session key, thereby generating an encrypted session key, and outputs the generated encrypted session key to the IC card 300. The IC card 300 decrypts the encrypted session key, thereby generating a decrypted session key (step S107). The register apparatus 100 encrypts points with use of the session key, thereby generating encrypted points, and transmits the generated encrypted points. The IC card 300 decrypts the encrypted points with use of the decrypted session key (step S108).

(2) Operations by the register apparatus 100 for authenticating the IC card 300

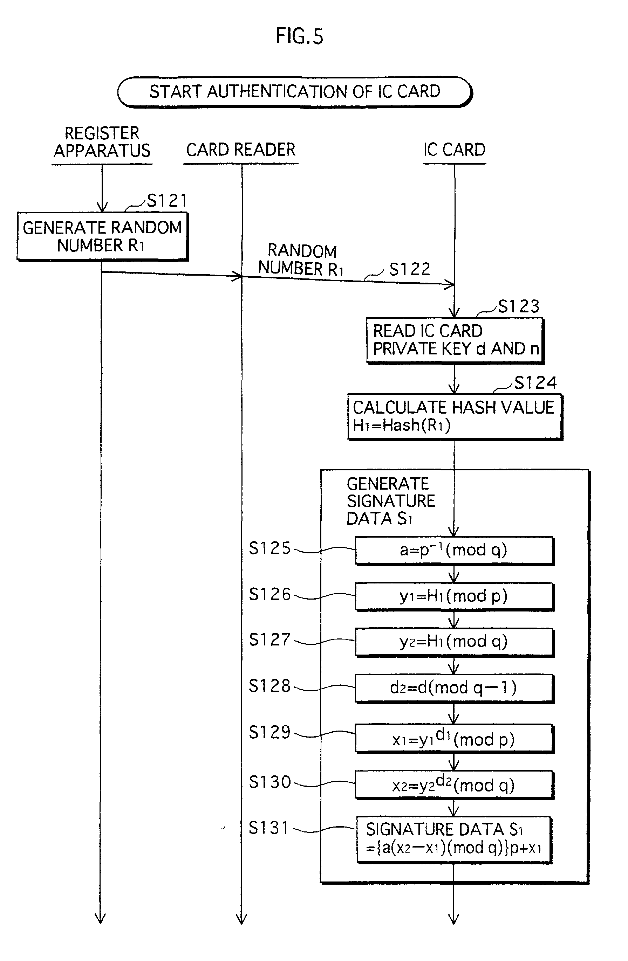

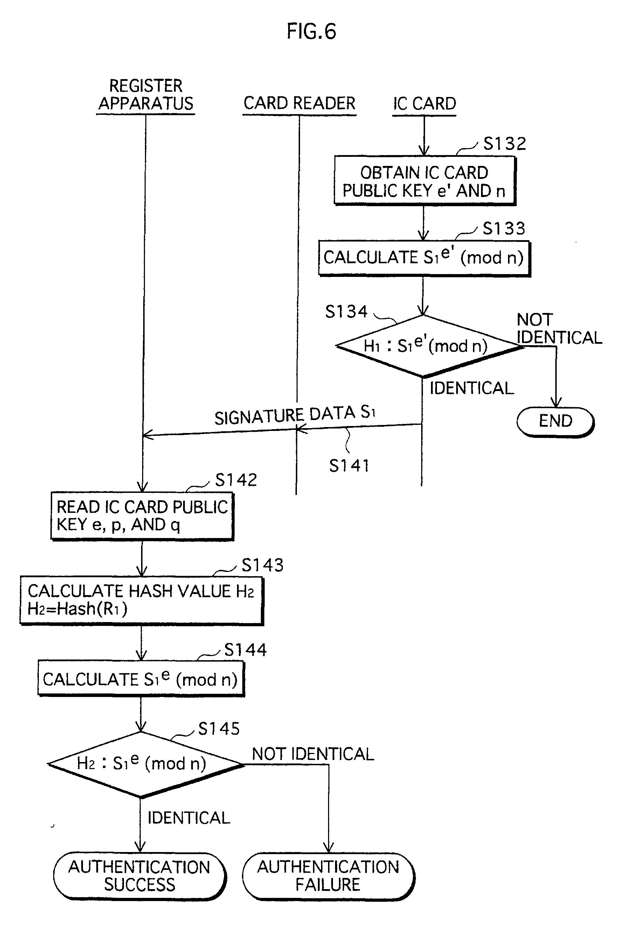

The following describes operations by the register apparatus 100 for authenticating the IC card 300, with use of the flowcharts shown in FIG. 5 and FIG. 6.

The authentication unit 108 of the register apparatus 100 generates a random number $R_1$ (step S121), and outputs the generated random number $R_1$ to the IC card 300 via the input/output unit 110 and the card reader 200 (step S122).

The authentication unit 302 of the IC card 300 receives the random number $R_1$ from the register apparatus 100 via the card reader 200 and the input/output unit 301 (step S122), reads the prime $p$, the prime $q$, and the private key $d$ from the key storage unit 309, receives the integer $n$ from the modulus computation unit 314 (step S123), and calculates the hash value $H_1 = Hash (R_1)$ with use of the received random number $R_1$ (step S124) .

Next, the authentication unit 302 calculates $a = p^{-1}$ (mod $q$) (step S125),

$$\text{calculates } y_1 = H_1 \quad (\text{mod } p) \qquad \text{(step S126),}$$

$$\text{calculates } y_2 = H_1 \quad (\text{mod } q) \qquad \text{(step S127),}$$

$$\text{calculates } d_2 = d \quad (\text{mod } q\text{-}1) \qquad \text{(step S128),}$$

$$\text{calculates } x_1 = y_1^{d1} \quad (\text{mod } p) \qquad \text{(step S129),}$$

$$\text{calculates } x_2 = y_2^{d2} \quad (\text{mod } q) \qquad \text{(step S130),}$$

and

$$\text{calculates } s_1 = \{a(x_2 - x_1) (\text{mod } q)\} \, p + x_1 \qquad \text{(step 131).}$$

The re-encryption unit 306 receives the public key $e'$ from the inverse computation unit 313, receives the integer $n$ from the modulus computation unit 314 (step S132), and calculates $s_1^{e'}$ (mod $n$) (step S133).

The authentication unit 302 judges whether the hash value $H_1$ and $S_1^{e'}$ (mod $n$) are identical, and when the two judged not to be identical (step S134), considers an error to have occurred, and notifies the control unit 305 of error information indicating that an error has occurred. The IC card 300 subsequently stops operations.

When the two are judged to be identical (step S134 ) , the authentication unit 302 outputs generated signature data $S_1$ to the register apparatus 100 via the input/output unit 301 and the card reader 200 (step S141).

The authentication unit 108 of the register apparatus 100 receives the signature data $S_1$ from the IC card 300 via the card reader 200 and the input/output unit 110 (step S141), and reads the IC card 300 public key $e$, the prime $p$, and the prime q from the key storage unit 111 (step S142) . The authentication unit 108 then applies a hash function $Hash$ to the generated random number $R_1$, thereby generating a hash value $H_2 = Hash (R_1)$ (step S143).

Next, the authentication unit 108 calculates $n = p^*q$, calculates $S_1^{e'}$ (mod $n$) (step S144 ) , compares the generated hash value $H_2$ and the obtained value $S_1^{e'}$ (mod $n$) , and if the two are identical, considers authentication to have succeeded (step S145). If the two are not identical (step S145), the authentication unit 108 considers authentication to have failed.

(3) Operations by the IC card 300 for authenticating the register apparatus 100

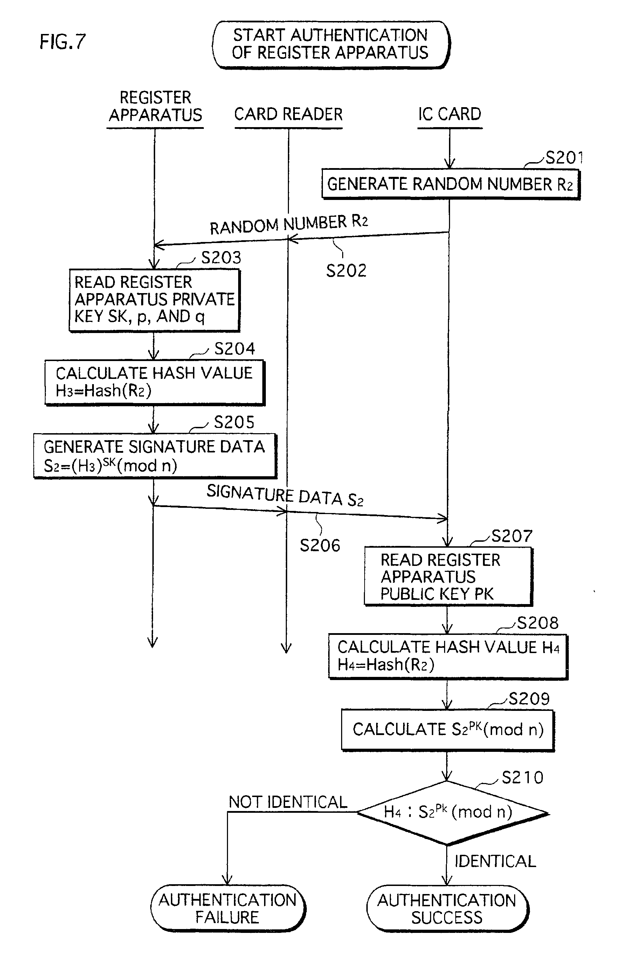

The following describes operations by the IC card 300 for authenticating the register apparatus 100, with use of the flowchart in FIG. 7.

The authentication unit 302 of the IC card 300 generates a random number $R_2$ (step S201) , and outputs the generated random number $R_2$ to the register apparatus 100 via the input/output unit 301 and the card reader 200 (step S202).

The authentication unit 108 of the register apparatus 100 receives the random number $R_2$ from the IC card reader 300 via the card reader 200 and the input/output unit 110 (step S202), and reads the private key *SK,* the prime *p*, and the prime *q* from the key storage unit 111 (step S203) . The authentication unit 108 applies a hash function *Hash* to the received random number $R_2$, thereby calculating a hash value $H_3 =Hash (R_2)$ (step S204). Next, the authentication unit 108 calculates *n* =*p\*q*, calculates signature data $S_2 = (H_3)^{SK}$ (mod *n*) (step S205), and outputs the obtained signature data $S_2$ to the IC card 300 via the input/output unit 110 and the card reader 200 (step S206).

Next, the authentication unit 302 of the IC card 300 receives the signature data $S_2$ from the register apparatus 100 via the card reader 200 and the input/output unit 301 (step S206 ) , and reads the register apparatus 100 public key *PK*, the prime *p*, and the prime *q* from the key storage unit 309 (step S207). The authentication unit 302 then calculates integer *n* = *p\*q*, and calculates a hash value $H_4 =Hash (R_2)$ with use of the generated random number $R_2$ (step S208). Next, the authentication unit 302 calculates $S_2^{PK}$ (mod *n*) (step S209), and judges whether $H_4$ and $S_2^{PK}$ (mod *n*) are identical. If the two are judged to be identical (step S210), the authentication unit 302 considers authentication to have succeeded, and if the two are not identical (step S210), the authentication unit 302 considers authentication to have failed.

If authentication fails, the IC card 300 does not perform subsequent transmission and reception of information with the register apparatus 100.

(4) Operations for session key transfer

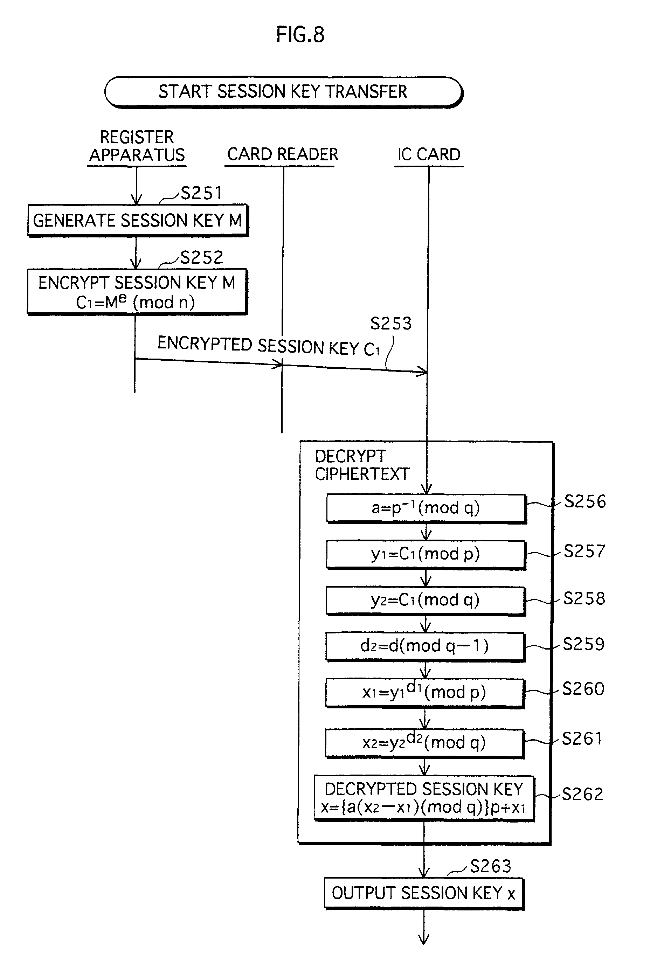

The following describes operations for session key transfer, with use of the flowchart in FIG. 8.

The encryption/decryption unit 109 of the register apparatus 100 generates a random number, and uses the generated random number as a session key *M* (step S251). The encryption/decryption unit 109 then reads the prime *p*, the prime *q*, and the public key *e*, calculates an integer *n* = *p\*q*, and calculates an encrypted session key $C_1 =M^e$ (mod *n*), with use of the session key *M*, the integer *n*, and the public key *e* (step S252). Next, the encryption/decryption unit 109 outputs the obtained encrypted session key $C_1$ to the IC card 300 via the input/output unit 110 and the card reader 200 (step S253).

The encryption unit 303 of the IC card 300 receives the encrypted session key $C_1$ from the register apparatus 100 via the card reader 200 and the input/output unit 301 (step S253), receives the prime *p* and the prime *q* from the key information unit 309, receives the number $d_1$ from the remainder computation unit 312, and calculates the following equations in the stated order.

$$a= p^{-1} \quad (\text{mod } q) \qquad\qquad (\text{step S256})$$

$$y_1= C_1 \quad (\text{mod } p) \qquad\qquad (\text{step S257})$$

$$y_2= C_1 \quad (\text{mod } q) \qquad\qquad (\text{step S258})$$

$$d_2= d \quad (\text{mod } q\text{-}1) \qquad\qquad (\text{step S259})$$

$$x_1= y_1^{d1} \quad (\text{mod } p) \qquad\qquad (\text{step S260})$$

$$x_2 = y_2^{d2} \qquad (\text{mod } q) \qquad\qquad\qquad (\text{step S261})$$

$$x = \{a(x_2 - x_1)\,(mod\ q)\}\ p + x_1 \qquad\qquad\qquad (\text{step S262})$$

The encryption unit 303 then outputs the obtained decrypted session key $x$ to the decryption unit 308 (step S263).

(5) Operations for secret communication

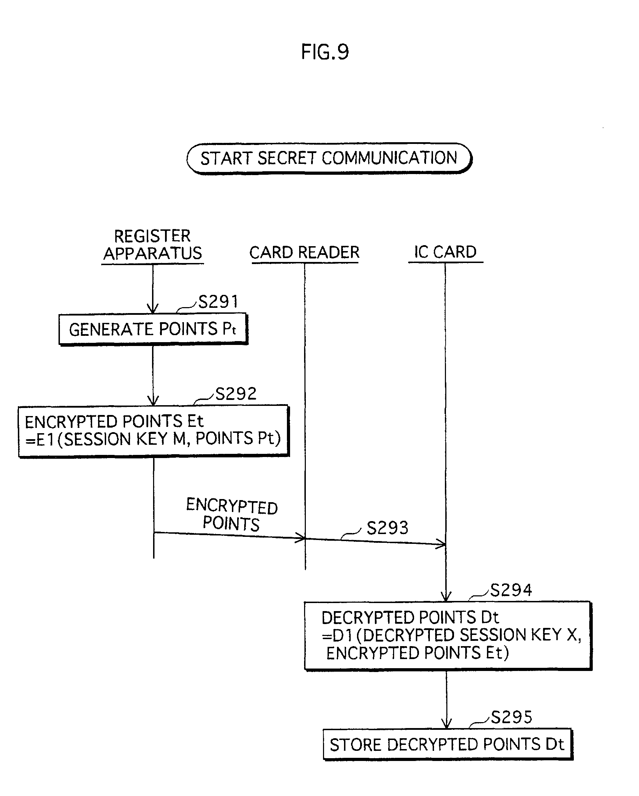

The following describes operations for secret communication, with use of the flowchart in FIG. 9.
The control unit 107 of the register apparatus 100 generates incentive points $Pt$ in accordance with a purchase amount of a product purchased by the user, according to an operation by the retail establishment sales assistant (step S291) . Next, the encryption/decryption unit 109 applies an encryption algorithm $E_1$ to the points $Pt$ with use of the generated session key $M$ as the key, thereby generating encrypted points $Et = E_1$ (session key $M$, points $Pt$) (step S292) , and outputs the encrypted points $Et$ to the IC card 300 via the input/output unit 110 and the card reader 200 (step S293).
The authentication unit 308 of the IC card 300 receives the encrypted points $Et$ via the card reader 200 and the input/output unit 301 (stepS293), receives the decrypted session key $x$ from the decryption unit 303, and applies a decryption algorithm $D_1$ to the received encrypted points $Et$ with use of the received decrypted session key $x$ as the key, thereby generating decrypted points $Dt$ (step S294). The authentication unit 308 then writes the generated decrypted points $Dt$ to the information storage unit 307 (step S295).

1.6 Proof that $e'$ is the public key

Here, it is proved that e' $= d_1^{-1}$ (mod $p$-1) when $d_1 = d$ (mod $p$-1).
The public key $e'$ is defined by $e' = d^{-1}$ (mod $LCM$ ($p$-1, $q$-1)). Here, $LCM$ (x, y) shows the least common multiple of $x$ and $y$.
$LCM$ ($p$-1, $q$-1) can be expressed as $n*$ ($p$-1) , and therefore $e'*d = n*(m*(p$-1))+1.
Here, if $e<p$-1,

$$e'*(k*(p\text{-}1)+d_1) = n*(m*(p*1))+1$$

$$e'*d_1 = (n*m\text{-}e*k)*(p\text{-}1)+1,$$

and

$$e' = d_1^{-1} (\text{mod } p\text{-}1).$$

2. Second Embodiment

The following describes and RSA secret communication system 20 as another embodiment of the present invention.

(1) Structure of the RSA secret communication system 20

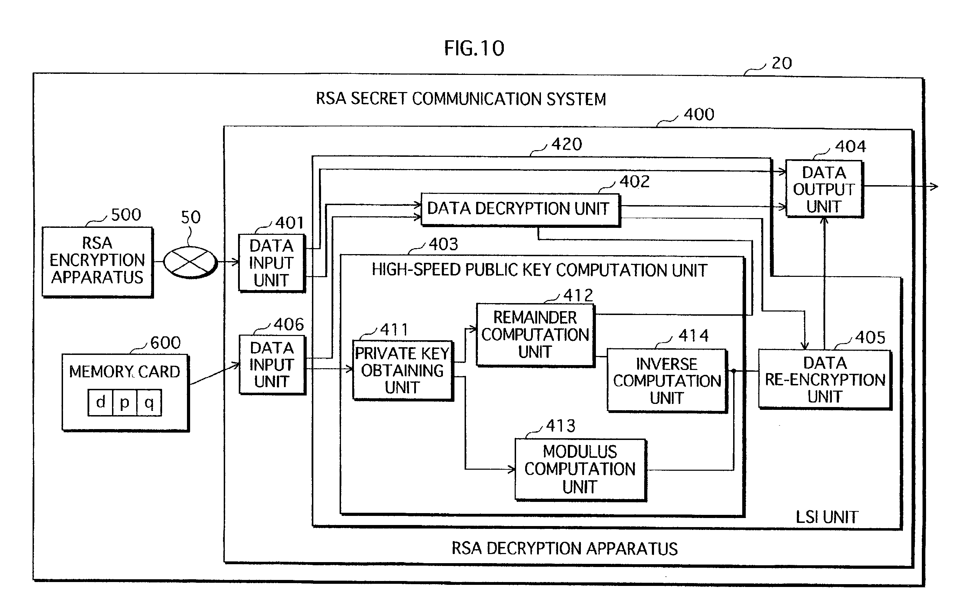

The RSA secret communication system 20, as shown in FIG. 10, is composed of an RSA encryption apparatus 500, an RSA decryption apparatus 400, and a memory card 600. The RSA encryption apparatus 500 and the RSA decryption apparatus 400 are connected via a network 50.
In key generation in the RSA cryptography method, a public key $e$ is generated that is mutually relatively prime with a least common multiple $lcm$ of $p$-1 and $q$-1 and satisfies an expression $p$-1>$e$, where a large prime $q$ and a large prime $p$ differ in value and a number $n = p*q$. Furthermore, an inverse of the public key $e$ is generated over a residue field with the least common denominator $lcm$ as a modulus, and the generated inverse is used as a private key $d$. The public key $e$ generated in this way is notified in advance to the RSA encryption apparatus 500.

The RSA encryption apparatus 500 encrypts a plaintext $M$ with use of the public key $e$ as the key, according to the RSA cryptography method, thereby calculating a ciphertext $C=M^e$ (mod $n$). Here, $n = p*q$.

The memory card 600 is a portable semiconductor memory, and stores in advance a private key $d$, a prime $p$, and a prime $q$ that are used in decryption processing.

The RSA decryption apparatus 400 is an apparatus for decrypting the ciphertext $C = M^e$ (mod $n$) that has been generated by the RSA encryption apparatus 500. As shown in FIG. 10, the RSA decryption apparatus 400 is composed of a data input unit 401, an LSI unit 420, a data output unit 404, and a data input unit 406. The LSI unit 420 is a system LSI, and includes a data decryption unit 402, a high-speed public key computation unit 403, and a data re-encryption unit 405. Furthermore, the high-speed public key computation 403 includes a private key obtaining unit 411, a remainder computation unit 412, a modulus computation unit 413, and an inverse computation unit 414.

The data input unit 401 obtains the ciphertext $C = M^e$ (mod $n$), which is the target of decryption, from the RSA encryption apparatus 500 via the network 50.

The data input unit 406 obtains the private key $d$, the prime $p$ and the prime $q$ from the memory card 600 that are used in decryption processing.

Using the private key $d$, the prime $p$, and the prime $q$ obtained by the data input unit 406, the data decryption unit 402 decrypts the ciphertext $C$ according to Chinese Remainder Theorem (hereinafter, referred to as "CRT"), thereby generating a deciphertext $D$. Specifically, the data decryption unit 402 performs the following computations.

$$a = p^{-1} \quad (\text{mod } q)$$

$$y_1 = C \quad (\text{mod } p)$$

$$y_2 = C \quad (\text{mod } q)$$

$$d_2 = d \quad (\text{mod } q\text{-}1)$$

$$x_1 = y_1^{d1} \quad (\text{mod } p)$$

$$x_2 = y_2^{d2,} \quad (\text{mod } q)$$

$$D = \{a(x_2 - x_1) \, (\text{mod } q)\} \, p + x_1$$

The data decryption unit 402 outputs the generated deciphertext D to the data output unit 404 and the data re-encryption unit 405.

The high-speed public key calculation unit 403 obtains the private key $e$, the prime $p$, and the prime $q$ from the data input unit 403 , and calculates a public key $e_1$ . Some data obtained part-way through this calculation is sent to the data decryption unit 402, and used in decryption operations.

The private key obtaining unit 411 of the high-speed public key computation unit 403 obtains the private key $d$, the prime $p$, and the prime $q$ from the data input unit 406.

The modulus computation unit 413 multiplies the prime $p$ and the prime $q$, to calculate an integer $n$.

The remainder computation unit 412 calculates a value

$d_1 = d$ mode ($p$-1) from the private key $d$, the prime $p$, and the prime $q$, and stores the calculated $d_1$.

The inverse computation unit 414 calculates inverse $e_1 = d_1^{-1}$ (mod $p$-1) over a residue field with a $p$-1 as a modulus, and outputs the calculated inverse $e_1$ to the data re-encryption unit 405 as a public key. The inverse computation unit 414 also outputs $d_1$ to the data decryption unit 402.

The data re-encryption unit 405 re-encrypts the deciphertext $D$ generated by decryption by the data decryption unit 402, with use of the public key $e_1$ generated by the high-speed public key computation unit 403, thereby generating an re-ciphertext $C' = D^{e1}$ (mod $n$) . The data re-encryption unit 405 then outputs the generated re-ciphertext to the data output unit 404.

The data output unit 404 compares the re-ciphertext $C'$ obtained by the data re-encryption unit 405 and the ciphertext *C* obtained by the data input unit 401, and when the two are identical, outputs the decipher text *D* obtained by the data decryption unit 402. When the two are not identical, the data output unit 404 does not output *D*.

(2) RSA decryption operations in the RSA decryption apparatus 400

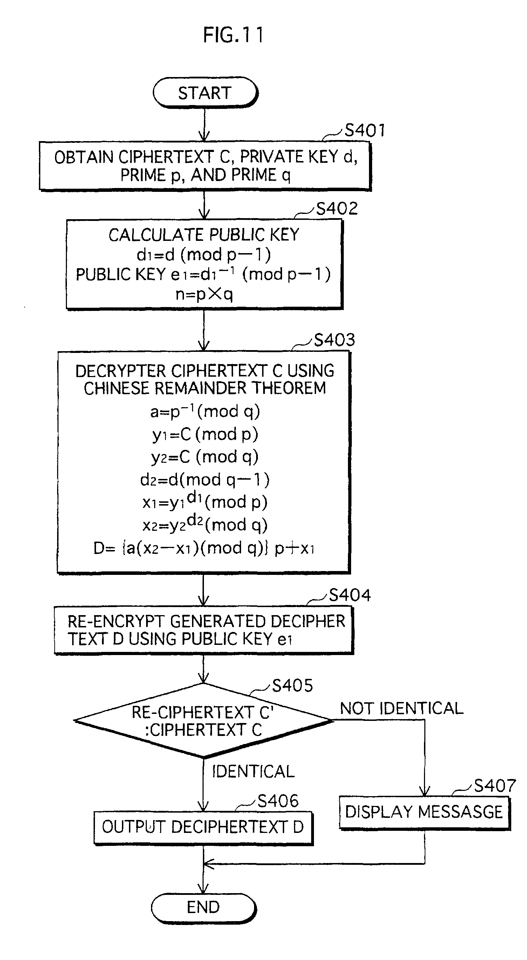

The following describes RSA decryption operations in the RSA decryption apparatus 400, with use of the flowchart in FIG. 11.

The data input unit 401 obtains the ciphertext *C*, and the data input unit 406 obtains the private key *d*, the prime *p*, and the prime *q* (step S401).

Next, the private key obtaining unit 411 of the high-speed public key computation unit 403 obtains the private key *d*, the prime *p*, and the prime *q*. The modulus computation unit 413 multiplies the prime *p* and the prime *q*, to obtain an integer *n*. The remainder computation unit 413 calculates a value $d_1 = d$ mode ($p$-1) from the private key *d*, the prime *p*, and the prime *q*, and stores the calculated $d_1$. The inverse computation unit 414 calculates a public key $e_1 = d_1^{-1}$ (mod *p-1*) (step S402).

Next, the data decryption unit 402 decrypts the ciphertext C using CRT, thereby generating a deciphertext D (step S403 ) .

The data re-encryption unit 405 re-encrypts the deciphertext *D* with use of the public key $e_1$ generated by the high-speed public key computation unit 403, thereby obtaining a re-ciphertext *C'* (step S404).

The data output unit 404 compares the re-ciphertext *C'* and the ciphertext *C*, and when the two are identical (step S405 ) , outputs the deciphertext *D* (step S406). When the re-ciphertext *C'* and the ciphertext *C* are not identical (step S405), instead of outputting the deciphertext *D*, the data output unit 404 displays or outputs a message showing that a failure has occurred (step S407).

(3) Conclusion

According to the described second embodiment, input to the inverse computation for calculating the value of the public key $e_1$ is half the bit length of that in a conventional technique. Since the amount of memory required for inverse computations is proportionate to the input bit length, and the processing time is proportionate to the power of two of the input bit length, the second embodiment greatly reduces the required memory amount and processing time. Furthermore, $d_1$ that is the input value of inverse computation can also be used in decryption computation in which Chinese Remainder Theorem is used. This greatly reduces the processing time of decryption computation.

Note that although a structure is described in which the remainder computation unit for calculating $d_1$ is provided inside the high-speed public key computation unit and the value is sent to the data decryption unit, a possible alternative structure is one in which the remainder calculation unit is provided inside the data decryption unit and calculates $d_1$, and sends the value to the high-speed public key computation unit. In this case, the order of the high-speed public key generation step (step S402) and the high-speed decryption step (step S403) in FIG. 11 is reversed.

3. Third Embodiment

The following describes an RSA secret communication system 30 as a modification of the RSA secret communication system 20 of the second embodiment.

(1) Structure of the RSA secret communication system 30

The RSA secret communication system 30 has a similar structure to the RSA secret communication system 20. The following description focuses on aspects that differ from the RSA secret communication system 20.

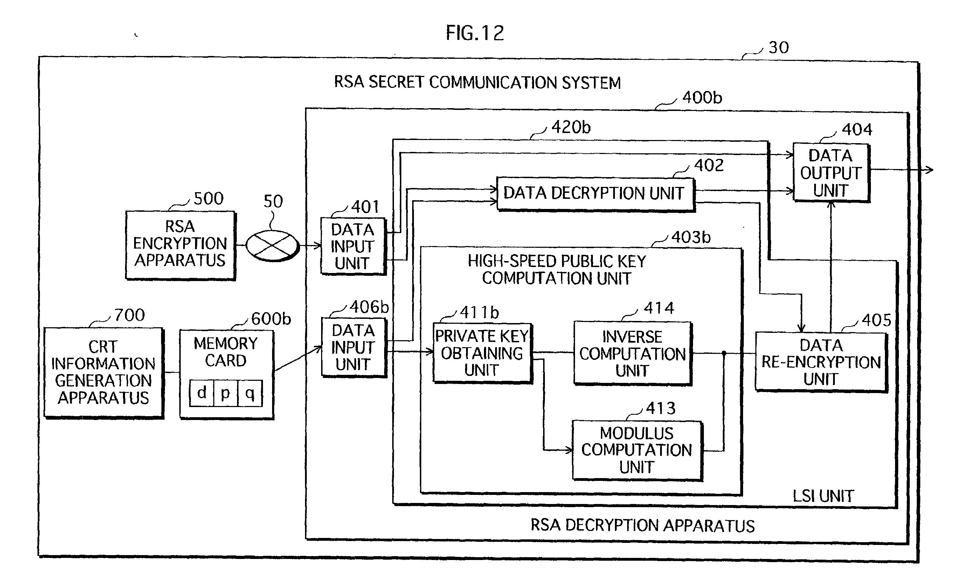

The RSA secret communication system 30, as shown in FIG. 12, is composed of an RSA encryption apparatus 500, an RSA decryption apparatus 400b, a CRT information generation apparatus 700, and a memory card 600b. The RSA encryption apparatus 500 and the RSA decryption apparatus 400 are connected over the network 50.

The memory card 600b is a portable semiconductor memory similar to the memory card 600, and stores in advance a private key *d* used in decryption processing, a prime *p*, and a prime *q*.

The CRT information generation apparatus 700 reads the private key *d*, the prime *p*, and the prime *q* from the memory card 600b, and, using the read private key *d*, prime *p*, and prime *q*, calculates

$$d_1 = d \bmod (p\text{-}1)$$

and

$$d_2 = d \bmod (q\text{-}1),$$

and writes the obtained $d_1$ and $d_2$ to the memory card 600b.

The RSA decryption apparatus 400b has a similar structure to the RSA decryption apparatus 400, and is for decrypting a cipher text $C=M^e \pmod{n}$ generated by the RSA encryption apparatus 500. As shown in FIG. 12, the RSA decryption apparatus 400b is composed of a data input unit 401, an LSI unit 420b, a data output unit 404, and a data input unit 406. The LSI unit 420b is a system LSI having a similar structure to the LSI unit 420, and includes a data decryption unit 402, a high-speed public key computation unit 403b, and a data re-encryption unit 405. Furthermore, the high-speed public key computation unit 403b includes a private key obtaining unit 411b, a modulus computation unit 413, and an inverse computation unit 414.

The data input unit 406b obtains a private key d, a prime $p$, a prime $q$, $d_1$, and $d_2$ used in decryption processing from the memory card 600b.

The data decryption unit 402b decrypts the ciphertext $C$ with use of the private key d the prime $p$, the prime $q$, $d_1$, and $d_2$ obtained by the data input unit 406b. Specifically, the data decryption unit 402b performs the following computations.

$$a = p^{-1} \pmod{q}$$

$$y_1 = C \pmod{p}$$

$$y_2 = C \pmod{q}$$

$$x_1 = y_1^{d1} \pmod{p}$$

$$x_2 = y_2^{d2} \pmod{q}$$

$$D = \{a(x_2 - x_1) \,(\bmod\ q)\}\, p + x_1$$

Next, the data decryption unit 402b outputs the generated deciphertext $D$ to the data output unit 404 and the data re-encryption unit 405.

Here, the data decryption unit 402b differs from the data decryption unit 420 in that instead of computing $d_2 = d \pmod{q\text{-}1}$, it obtains $d_2$ from the memory card 600b.

The high-speed public key encryption unit 403b obtains the private key $e$, the prime $p$, the prime $q$, and $d_1$ from the data input unit 406, and calculates a public key $e_1$. Some data obtained part-way through this calculation is sent to the data decryption unit 402, and used in decryption operations.

The private key obtaining unit 411b of the high-speed public key calculation unit 403b obtains the prime $p$, the prime $q$, and $d_1$ from the data input unit 406b.

The modulus computation unit 413 multiplies the prime $p$ and the prime $q$, to calculate an integer $n$.

The inverse computation unit 414 calculates inverse $e_1 = d_1^{-1} \pmod{p\text{-}1}$ on a residue field with $p$-1 as a modulus, and outputs the calculated inverse $e_1$ to the data re-encryption unit 405 as a public key.

(2) Operations of the RSA secret communication system 30

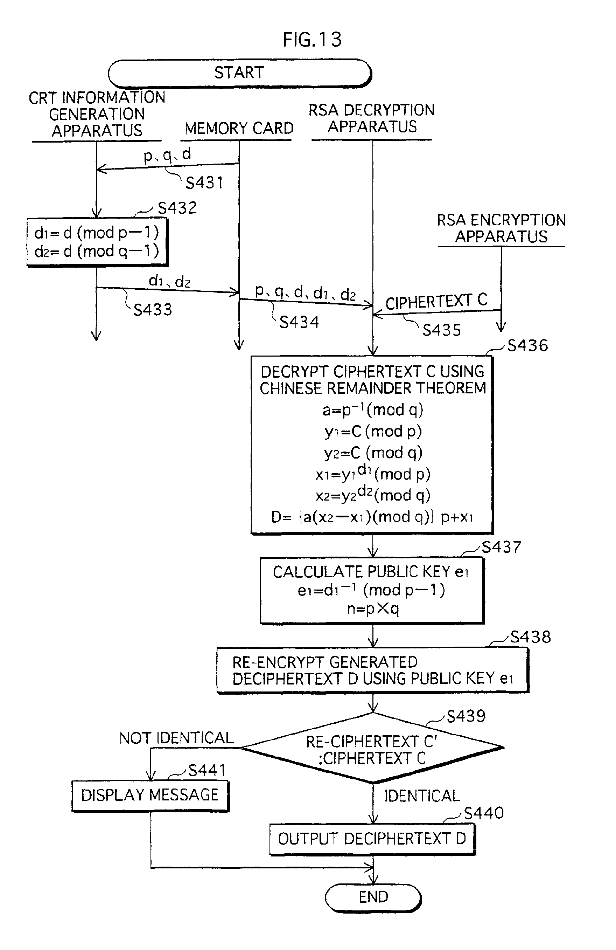

The following describes operations of the RSA secret communication system 30, with use of the flowchart in FIG. 13.

The CRT information generation apparatus 700 reads the private key d, the prime $p$, and the prime $q$ from the memory card 600b (step S431), calculates $d_1 = d \bmod (p\text{-}1)$ and $d_2 = \bmod (q\text{-}1)$ using the read private key d, prime $p$, and prime $q$ (step S432), and writes the obtained $d_1$ and $d_2$ to the memory card 600b (step S433).

The data input unit 406b of the RSA decryption apparatus 400b obtains the decryption key d, the prime $p$, the prime $q$, $d_1$, and $d_2$ used in decryption processing from the memory card 600b (step S434).

The data input unit 401 obtains the ciphertext $C$ from the RSA encryption apparatus 500 via the network 50 (step S435).

The data decryption unit 402b, using the private key $d$, the prime $p$, the prime $q$, $d_1$, and $d_2$ obtained by the data input unit 406b, decrypts the ciphertext $C$ according to Chinese Remainder Theorem, thereby generating a decipher text $D$ (step S436).

Next, the inverse computation unit 414 calculates inverse $e_1 = d_1^{-1}$ (mod $p$-1) (step S437). The data re-encryption unit 405 re-encrypts the deciphertext $D$ with use of the public key $e_1$, thereby generating a re-ciphertext $C'$ (step S438).

The data output unit 404 compares the re-ciphertext $C'$ and the ciphertext $C$, and when the re-ciphertext $C'$ and the ciphertext $C$ are identical (step S439 ) , outputs the deciphertext $D$ (step S440). When the re-ciphertext $C'$ and the ciphertext $C$ are not identical (step S439), instead of outputting the deciphertext $D$, the data output unit 404 displays or outputs a message showing that a failure has occurred (step S441).

(3) Conclusion

As has been described, in the third embodiment, instead of obtaining a conventional private key, the RSA decryption apparatus obtains a private key that has been calculated in advance for use in CRT, from an external source. In other words, the RSA decryption apparatus obtains the values of $d_1$ =mod ($p$-1) , $d_2$ = mod ($q$-1), $p$, and $q$. Note that depending of the way CRT is used, it is sufficient for the data received from the external source to include at least $d_1$.

The data decryption unit 402 and the high-speed public key calculation unit 403b perform their respective processing using values obtained by the data input unit 406b. Consequently, it is unnecessary to transmit $d_1$ between the data decryption unit 402 and the high-speed public key computation unit 403 as is done in the second embodiment.

Note that although $d_1$ =mod ($p$-1), $d_2$ = mod ($q$-1), $p$, and $q$ are obtained from an external source in the third embodiment, depending of the way CRT is used, it is sufficient for the data received from the external source to include at least $d_1$..

Furthermore, since $d_1$ is obtained from an external source, it is unnecessary for the high-speed public key computation unit 403b to include the remainder computation unit 412 described in the second embodiment.

Note also that although the high-speed decryption step (step S436) is followed by the high-speed key obtaining step (step S437) in the flowchart in FIG. 13, these two steps may be performed in the opposite order. In other words, the high-speed key obtaining step (step S437) may be followed by the high-speed decryption step (step S436).

In addition to the effects of the second embodiment, the third embodiment has a superior effect of further reducing processing time because remainder processing for finding $d_2$ is unnecessary.

Note that although an example of an RSA decryption apparatus is given in the above, the present invention may be similarly applied to an RSA signature generation apparatus.

Furthermore, the present invention may be similarly, applied in cases where an RSA public key is obtained from an RSA private key in apparatuses other than RSA decryption apparatuses and an RSA signature generation apparatuses.

4. Outline of the Invention

The present invention is an RSA public key recovery apparatus that recovers a public key ($e$, $n$) from a private key ($d$, $p$, $q$), in RSA cryptography in which ($e$, $n$) is used as the public key and ($d$, $p$, $q$) is used as the private key, and in which is used primes $p$ and $q$, a number $e$ that is mutually relatively prime with a least common multiple $lcm$ of $p$-1 and $q$-1 and that satisfies $p$-1>$e$, $d$ that is an inverse of $e$ over a residue field with $lcm$ as a modulus, and a product $n$ of $p$ and $q$, the RSA public key recovery apparatus comprising:

    a first private key input unit operable to input an RSA cryptography private key *(d, p, q)*;
    a first remainder unit operable to find $dp$ =$d$ mod ($p$-1), which is a remainder of $d$ with $p$-1 as a modulus, using $d$ and $p$ of the private key input by the first private key input unit;
    a first inverse computation unit operable to find an inverse of $dp$ over a residue field with $p$-1 as a modulus, using $dp$ obtained by the first remainder unit and $p$ input by the first private key input unit; and
    a public key output unit operable to output ($e$, $n$) as an RSA public key, $n$ being a product of $p$ and $q$ of the private key input by the first private key input unit, and $e$ being the inverse obtained by the first inverse computation unit.

Furthermore, the present invention is an RSA decryption apparatus that decrypts a ciphertext that has been generated using a public key and thereby obtains an original plaintext, in RSA cryptography in which ($e$, $n$) is used as a public key and ($d$, $p$, $q$) is used as a private key, and in which is used primes $p$ and $q$, a number $e$ that is mutually relatively prime with a least common multiple $lcm$ of $p$-1 and $q$-1 and that satisfies $p$-1>$e$, $d$ that is an inverse of $e$ over a residue field with $lcm$ as a modulus, and a product $n$ of $p$ and $q$, the RSA decryption apparatus comprising:

a ciphertext input unit operable to input a ciphertext *C*;

a second private key input unit operable to input an RSA encryption private key (*d*, *p*, *q*);

a decryption unit operable to decrypt, with use of the private key input by the second private key input unit, the ciphertext *C* input by the ciphertext input unit, thereby obtaining a plaintaxt *P*;

a second remainder unit operable to find $dp=d$ mod ($p$-1), which is a remainder of *d* with *p*-1 as a modulus, with use of the private key input by the second private key input unit;

a second inverse computation unit operable to find an inverse of *dp* over a residue field with *p*-1 as a modulus, with use of *dp* obtained by the second remainder unit and *p* input by the second private key input unit;

a first public key recovery unit operable to store (e, *n*) as an RSA public key, *n* being a product of *p* and *q* of the private key input by the second private key input unit, and e being the inverse obtained by the second inverse computation unit;

an encryption unit operable to find a ciphertext *C'* from the plaintext *P* obtained by the decryption unit, with use of the public key stored by the first public key recovery unit;

a first proof unit operable to compare the ciphertext *C'* found by the encryption unit and the ciphertext *C* input by the ciphertext input unit; and

a decryption result output unit operable to output the plaintext *P* only when a result of the comparison by the first proof unit is that the ciphertext *C'* and the ciphertext *C* are identical.

Here, instead of the decryption unit, the RSA decryption apparatus may comprise a CRT decryption unit operable to decrypt the ciphertext *C* input by the ciphertext input unit, with an algorithm that uses Chinese Remainder Theorem (CRT) and with use of the private key input by the second private key input unit and $d_p$ obtained by the second remainder unit.

Here, instead of the second private key input unit and the second remainder unit, the RSA decryption apparatus may comprise a third private key input unit operable to input in advance, as the RSA cryptography private key, a value that includes at least $d_p$, and that is necessary in an algorithm that uses Chinese Remainder Theory, wherein the second remainder unit, the first public key recovery unit, and the CRT decryption unit use the value input by the third private key input unit.

Here, the RSA decryption apparatus may further comprise a first error output unit operable to output a message indicating that failure has occurred, when the result of the comparison by the first proof unit is that the ciphertext *C'* and ciphertext *C* are not identical.

Furthermore, the present invention is an RSA signature generation apparatus that generates a signature froma plaintext, in RSA cryptography in which (*e*, *n*) is used as a public key and ( *d, p, q*) is used as a private key, and in which is used primes *p* and *q*, a number *e* that is mutually relatively prime with a least common multiple *lcm* of *p*-1 and *q*-1 and that satisfies *p*-1>*e*, *d* that is an inverse of *e* over a residue field with *lcm* as a modulus, and a product *n* of *p* and q, the RSA signature generation apparatus comprising:

a plaintext input unit operable to input a plaintext *P*;

a fourth private key input unit operable to input an RSA cryptography private key (*d*, *p*, *q*);

a signature generation unit operable to generates a signature *S* from the plaintext *P* input by the plaintext input unit, with use of the private key input by the fourth private key input unit;

a third remainder unit operable to find $dp= d$ mod ($p$-1), which is a remainder of *d* with *p*-1 as a modulus, with use of *d* and *p* of the private key input by the fourth private key input unit;

a second public key restoration unit operable to store (*e*, *n*) as an RSA public key, *n* being a product of *p* and *q* of the private key input by the fourth private key input unit, and *e* being the inverse obtained by the third inverse computation unit;

a plaintext restoration unit operable to find a plaintext *P'* from the signature *S* found by the signature generation unit, with use of the public key held by the second public key recovery unit;

a second proof unit operable to compare the plaintext *P'* found by the plaintext restoration unit and the plaintext *P* input by the plaintext input unit; and

a signature result output unit operable to output the signature *S* only when the a result of the comparison by the second proof unit is that the plaintext *P'* and the plaintext *P* are identical.

Here, instead of the signature generation unit, the RSA signature generation apparatus may comprise a CRT signature generation unit operable to generate the signature *S* from the plaintext *P* by the plaintext input unit, with an algorithm that uses Chinese Remainder Theorem (CRT) and with use of the private key input by the fourth private key input unit and *dp* obtained by the third remainder unit.

Here, instead of the fourth private key input unit and the third remainder unit, the RSA signature generation apparatus may comprise a fifth private key input unit operable to input in advance, as the RSA cryptography private key, a value that includes at least $d_p$, and that is necessary in an algorithm that uses Chinese Remainder Theory,

wherein the third inverse unit, the second public key recovery unit, and the CRT signature generation unit use the value input by the fifth private key input unit.

Here, the RSA decryption apparatus may further comprise a second error output unit operable to output a message indicating that failure has occurred, when the result of the comparison by the second proof unit is that the plaintext $P'$ and plaintext $P$ are not identical.

Furthermore, the present invention is an RSA public key recovery method that recovers a public key ($e$, $n$) from a private key ($d$, $p$, $q$), in RSA cryptography in which ($e$, $n$) is used as the public key and ($d$, $p$, $q$) is used as the private key, and in which is used primes $p$ and $q$, a number $e$ that is mutually relatively prime with a least common multiple $lcm$ of $p$-1 and $q$-1 and that satisfies $p$-1>$e$, $d$ that is an inverse of $e$ over a residue field with $lcm$ as a modulus, and a product $n$ of $p$ and q, the RSA public key recovery method comprising:

a first private key input step of inputting an RSA cryptography private key ($d$, $p$, $q$);
a first remainder step of finding $dp$ =$d$ mod ($p$-1), which is a remainder of $d$ with $p$-1 as a modulus, using $d$ and $p$ of the private key input in the first private key input step;
a first inverse computation step of finding an inverse of $dp$ over a residue field with $p$-1, as a modulus, using $dp$ obtained by the first remainder step and $p$ input in the first private key input step; and
a public key output step of outputting ($e$, $n$) as an RSA public key, $n$ being a product of $p$ and $q$ of the private key input in the first private key input step, and e being the inverse obtained in the first inverse computation step.

Furthermore, the present invention is an RSA decryption method that decrypts a ciphertext that has been generated using a public key and thereby obtains an original plaintext, in RSA cryptography in which ($e$, $n$) is used as a public key and ($d$, $p$, $q$) is used as a private key, and in which is used primes $p$ and $q$, a number e that is mutually relatively prime with a least common multiple $lcm$ of $p$-1 and $q$-1 and that satisfies $p$-1>$e$, $d$ that is an inverse of $e$ over a residue field with $lcm$ as a modulus, and a product $n$ of $p$ and $q$, the RSA decryption method comprising:

a ciphertext input step of inputting a ciphertext $C$;
a second private key input step of inputting an RSA encryption private key ($d$, $p$, $q$);
a decryption step of decrypting, with use of the private key input in the second private key input step, the ciphertext $C$ input in the ciphertext input step, thereby obtaining a plaintaxt $P$;
a second remainder step of finding $dp$=$d$ mod ($p$-1) , which is a remainder of $d$ with $p$-1 as a modulus, with use of the private key input in the second private key input step;
a second inverse computation step of finding an inverse of $dp$ over a residue field with $p$-1 as a modulus, with use of $dp$ obtained in the second remainder step and $p$ input in the second private key input step;
a first public key recovery step of storing ($e$, $n$) as an RSA public key, $n$ being a product of $p$ and $q$ of the private key input in the second private key input step, and e being the inverse obtained in the second inverse computation step;
an encryption step of finding a ciphertext $C'$ from the plaintext $P$ obtained in the decryption step, with use of the public key stored in the first public key recovery step;
a first proof step of comparing the ciphertext $C'$ found in the encryption step and the ciphertext $C$ input in the ciphertext input step; and
a decryption result output step of outputting the plaintext $P$ only when a result of the comparison in the first proof step is that the ciphertext $C'$ and the ciphertext $C$ are identical.

Here, instead of the decryption step, the RSA decryption step may comprise a CRT decryption step of decrypting the ciphertext $C$ input in the ciphertext input step, with an algorithm that uses Chinese Remainder Theorem (CRT) and with use of the private key input in the second private key input step and $d_p$ obtained in the second remainder step.

Here, instead of the second private key input step and the second remainder step, the RSA decryption method may compri se a third private key input step of inputting in advance, as the RSA cryptography private key, a value that includes at least $d_p$, and that is necessary in an algorithm that uses Chinese Remainder Theory,

wherein the second remainder step, the first public key recovery step, and the CRT decryption step use the value input in the third private key input step.

Here, the RSA decryption method may further comprise a first error output step of outputting a message indicating that failure has occurred, when the result of the comparison in the first proof step is that the ciphertext $C'$ and ciphertext $C$ are not identical.

Furthermore, the present invention is an RSA signature generation method that generates a signature from a plaintext, in RSA cryptography in which ($e$, $n$) is used as a public key and ($d$, $p$, $q$) is used as a private key, and in which is used primes $p$ and $q$, a number $e$ that is mutually relatively prime with a least common multiple *lcm of p*-1 and $q$-1 and that satisfies $p$-1>$e$, $d$ that is an inverse of $e$ over a residue field with *lcm* as a modulus, and a product $n$ of $p$ and $q$, the RSA signature generation method comprising:

a plaintext input step of inputting a plaintext $P$;
a fourth private key input step of inputting an RSA cryptography private key ($d$, $p$, $q$);
a signature generation step of generating a signature $S$ from the plaintext $P$ input in the plaintext input step, with use of the private key input in the fourth private key input step;
a third remainder step of finding $dp$= $d$ mod ($p$-1) , which is a remainder of $d$ with $p$-1 as a modulus, with use of $d$ and $p$ of the private key input in the fourth private key input step;
a second public key restoration step of storing (e, $n)$ as an RSA public key, $n$ being a product of $p$ and $q$ of the private key input in the fourth private key input step, and $e$ being the inverse obtained in the third inverse computation step;
a plaintext restoration step of finding a plaintext $P'$ from the signature $S$ found in the signature generation step, with use of the public key held in the second public key recovery step;
a second proof step of comparing the plaintext $P'$ found in the plaintext restoration step and the plaintext $P$ input in the plaintext input step; and
a signature result output step of outputting the signature $S$ only when the a result of the comparison in the second proof step is that the plaintext $P'$ and the plaintext $P$ are identical.

Here, instead of the signature generation step, the RSA signature generation method may comprise a CRT signature generation step of generating the signature $S$ from the plaintext $P$ in the plaintext input step, with an algorithm that uses Chinese Remainder Theorem (CRT) and with use of the private key input in the fourth private key input step and $dp$ obtained in the third remainder step.

Here, instead of the fourth private key input step and the third remainder step, the RSA signature generation method may comprise a fifth private key input step of inputting in advance, as the RSA cryptography private key, a value that includes at least $d_p$, and that is necessary in an algorithm that uses Chinese Remainder Theory,
wherein the third inverse step, the second public key recovery step, and the CRT signature generation step use the value input in the fifth private key input step.

Here, the RSA decryption method may further comprise a second error output step operable to output a message indicating that failure has occurred, when the result of the comparison in the second proof step is that the plaintext $P'$ and plaintext $P$ are not identical.

Furthermore, the present invention is an RSA public key recovery program that recovers a public key ($e$, $n$) from a private key ($d$, $p$, $q$), in RSA cryptography in which ($e$, $n$) is used as the public key and ($d$, $p$, $q$) is used as the private key, and in which is used primes $p$ and $q$, a number $e$ that is mutually relatively prime with a least common multiple *lcm* of $p$-1 and $q$-1 and that satisfies $p$-1>$e$, $d$ that is an inverse of $e$ over a residue field with *lcm* as a modulus, and a product $n$ of $p$ and $q$, the RSA public key recovery program comprising:

a first private key input step of inputting an RSA cryptography private key *(d, p, q);*
a first remainder step of finding $dp$ =$d$ mod ($p$-1) , which is a remainder of d with *p-1* as a modulus, using $d$ and $p$ of the private key input in the first private key input step;
a first inverse computation step of finding an inverse of $dp$ over a residue field with $p$-1 as amodulus, using $dp$ obtained by the first remainder step and $p$ input in the first private key input step; and
a public key output step of outputting ($e$, $n$) as an RSA public key, $n$ being a product of $p$ and $q$ of the private key input in the first private key input step, and $e$ being the inverse obtained in the first inverse computation step.

Furthermore, the present invention is an RSA decryption program that decrypts a ciphertext that has been generated using a public key and thereby obtains an original plaintext, in RSA cryptography in which (e, n) is used as a public key and (d, $p$, $q$) is used as a private key, and in which is used primes $p$ and $q$, a number $e$ that is mutually relatively prime with a least common multiple *lcm* of $p$-1 and $q$-1 and that satisfies $p$-1>$e$, $d$ that is an inverse of $e$ over a residue field with *lcm* as a modulus, and a product $n$ of $p$ and $q$, the RSA decryption program comprising:

a ciphertext input step of inputting a ciphertext $C$;
a second private key input step of inputting an RSA encryption private key *(d, p, q)*;
a decryption step of decrypting, with use of the private key input in the second private key input step, the ciphertext $C$ input in the ciphertext input step, thereby obtaining a plaintaxt $P$;
a second remainder step of finding $dp$=$d$ mod ($p$-1), which is a remainder of $d$ with $p$-1 as a modulus, with use of the private key input in the second private key input step;

a second inverse computation step of finding an inverse of $dp$ over a residue field with $p$-1 as a modulus, with use of $dp$ obtained in the second remainder step and $p$ input in the second private key input step;

a first public key recovery step of storing ($e$, $n$) as an RSA public key, $n$ being a product of $p$ and $q$ of the private key input in the second private key input step, and e being the inverse obtained in the second inverse computation step;

an encryption step of finding a ciphertext $C'$ from the plaintext $P$ obtained in the decryption step, with use of the public key stored in the first public key recovery step;

a first proof step of comparing the ciphertext $C'$ found in the encryption step and the ciphertext $C$ input in the ciphertext input step; and

a decryption result output step of outputting the plaintext $P$ only when a result of the comparison in the first proof step is that the ciphertext $C'$ and the ciphertext $C$ are identical.

Here, instead of the decryption step, the RSA decryption step may comprise a CRT decryption step of decrypting the ciphertext $C$ input in the ciphertext input step, with an algorithm that uses Chinese Remainder Theorem (CRT) and with use of the private key input in the second private key input step and $d_p$ obtained in the second remainder step.

Here, instead of the second private key input step and the second remainder step, the RSA decryption program may comprise a third private key input step of inputting in advance, as the RSA cryptography private key, a value that includes at least $d_p$, and that is necessary in an algorithm that uses Chinese Remainder Theory, wherein the second remainder step, the first public key recovery step, and the CRT decryption step use the value input in the third private key input step.

Here, the RSA decryption program may further comprise a first error output step of outputting a message indicating that failure has occurred, when the result of the comparison in the first proof step is that the ciphertext $C'$ and ciphertext $C$ are not identical.

Furthermore, the present invention is an RSA signature generation program that generates a signature from a plaintext, in RSA cryptography in which ($e$, $n$) is used as a public key and ($d$, $p$, $q$) is used as a private key, and in which is used primes $p$ and $q$, a number e that is mutually relatively prime with a least common multiple $lcm$ of $p$-1 and $q$-1 and that satisfies $p$-1>$e$, $d$ that is an inverse of $e$ over a residue field with $lcm$ as a modulus, and a product $n$ of $p$ and $q$, the RSA signature generation program comprising:

a plaintext input step of inputting a plaintext $P$;

a fourth private key input step of inputting an RSA cryptography private key ($d$, $p$, $q$);

a signature generation step of generating a signature $S$ from the plaintext $P$ input in the plaintext input step, with use of the private key input in the fourth private key input step;

a third remainder step of finding $dp = d \bmod (p$-1), which is a remainder of d with $p$-1 as a modulus, with use of $d$ and $p$ of the private key input in the fourth private key input step;

a second public key restoration step of storing ($e$, $n$) as an RSA public key, $n$ being a product of $p$ and $q$ of the private key input in the fourth private key input step, and e being the inverse obtained in the third inverse computation step;

a plaintext restoration step of finding a plaintext $P'$ from the signature $S$ found in the signature generation step, with use of the public key held in the second public key recovery step;

a second proof step of comparing the plaintext $P'$ found in the plaintext restoration step and the plaintext $P$ input in the plaintext input step; and

a signature result output step of outputting the signature $S$ only when the a result of the comparison in the second proof step is that the plaintext $P'$ and the plaintext $P$ are identical.

Here, instead of the signature generation step, the RSA signature generation program may comprise a CRT signature generation step of generating the signature $S$ from the plaintext $P$ in the plaintext input step, with an algorithm that uses Chinese Remainder Theorem (CRT) and with use of the private key input in the fourth private key input step and $dp$ obtained in the third remainder step.

Here, instead of the fourth private key input step and the third remainder step, the RSA signature generation program may comprise a fifth private key input step of inputting in advance, as the RSA cryptography private key, a value that includes at least $d_p$, and that is necessary in an algorithm that uses Chinese Remainder Theory, wherein the third inverse step, the second public key recovery step, and the CRT signature generation step use the value input in the fifth private key input step.

Here, the RSA decryption program may further comprise a second error output step operable to output a message indicating that failure has occurred, when the result of the comparison in the second proof step is that the plaintext $P'$ and plaintext $P$ are not identical.

As has been described, the RSA encryption processing apparatus of the present invention can achieve RSA encryption processing and the like at high-speed while preventing differential fault attacks, and is effective as an apparatus, such as an IC card, that must perform RSA encryption processing despite a possibility of receiving differential fault attacks.

According to the RSA public key recovery apparatus of the present invention, the value of which the inverse is found for the purpose of finding the public key has approximately half the number of bits as the private key. Therefore, the amount of memory and time required for inverse computation is greatly reduced.

Furthermore, according to the RSA encryption apparatus of the present invention, the value of which the inverse is found for the purpose of finding the public key has approximately half the number of bits as the private key. Therefore, the amount of memory and time required for inverse computation is greatly reduced. As a result, the time required for RSA decryption processing an the like against which differential fault attacks are unsuccessful is also reduced.

In addition, according to the RSA encryption processing apparatus of the present invention, the value of which the inverse in found for the purpose of finding the public key can be used as is in RSA decryption processing that uses a Chinese Remainder Theorem algorithm. As a result, the time required for RSA decryption processing an the like against which differential fault attacks are unsuccessful prevented is reduced.

Note that while the value of the public key is restricted to $p$-1 or less, with respect to the prime $p$, in the RSA public key recovery apparatus and the RSA encryption processing apparatus of the present invention, generally, an RSA cryptography public key is small, and therefore this does not pose a problem.

5. Modifications

Although the present invention has been described based on the above embodiments, the present invention is not limited to the above-embodiments. The following cases are included in the present invention.

(1) The IC card 300 of the first embodiment is not limited to including the system LSI 320. As one example, the high-speed public key computation unit 304 may compose one large-scale integrated circuit.

Furthermore, the RSA decryption unit 400 in the second embodiment is not limited to including the LSI unit 420. As one example, the high-speed public key computation unit 403 may compose one large-scale integrated circuit.

Furthermore, the RSA decryption unit 400b in the third embodiment is not limited to including the LSI unit 420b. As one example, the high-speed public key computation unit 403b may compose one large-scale integrated circuit.

(2) Each of the described apparatuses is, specifically, a computer system composed of a microprocessor, a ROM, a RAM, and so on. Computer programs are stored in the RAM, and the apparatus achieves its functions by the microprocessor operating according to the computer programs.

(3) The present invention may be methods shown by the above. Furthermore, the methods may be a computer program realized by a computer, andmay be a digital signal of the computer program.

Furthermore, the present invention may be a computer-readable recording medium such as a flexible disk, a hard disk, a CD-ROM (compact disc-read only memory), and MO (magneto-optical), a DVD-ROM (digital versatile disc-read only memory), a DVD-RAM(digitalversatile disc-random access memory, a BD (Blu-Ray Disc) or a semiconductor memory, that stores the computer program or the digital signal. Furthermore, the present invention may be the computer program or the digital signal recorded on any of the aforementioned recording medium apparatuses.

Furthermore, the present invention may be the computer program or the digital signal transmitted on a electric communication line, a wireless or wired communication line, or a network of which the Internet is representative.

Furthermore, the present invention may be a computer system that includes a microprocessor and a memory, the memory storing the computer program, and the microprocessor operating according to the computer program.

Furthermore, by transferring the program or the digital signal to the recording medium apparatus, or by transferring the program or the digital signal over a network or the like, the program or the digital signal may be executed by another independent computer system.

(4) The present invention may be any combination of the above-described embodiments and modifications.

Although the present invention has been fully described by way of examples with reference to the accompanying drawings, it is to be noted that various changes and modification will be apparent to those skilled in the art. Therefore, unless otherwise such changes and modifications depart from the scope of the present invention, they should be construed as being included therein.

*Industrial Applicability*

The apparatuses of the present invention may be used managerially, and repeatedly and continuously in various industries in which there is a necessity to treat information secretly, and in various industries in which there is a necessity to verify an opposite party. Furthermore, the apparatuses of the present invention may be manufactured managerially, and repeatedly and continuously in an electronic device manufacturing industry.

**Claims**

1.   An RSA public key generation apparatus that newly generates a public key $e'$ from an RSA cryptography private key $d$, comprising:

an obtaining unit operable to obtain the private key $d$ and a prime $p$, the private key $d$ being an inverse of a public key $e$ over a residue field with *lcm* as a modulus, the prime $p$ differing from a prime $q$, 1cm being a least common multiple of $p$-1 and $q$-1, and the public key $e$ being mutually relatively prime with 1cm and satisfying an expression $p$-1>$e$;
a remainder computation unit operable to calculate, using the obtained private key $d$ and the obtained prime $p$, a remainder $d_p$ of the private key $d$ with a prime $p$-1 as a modulus; and
an inverse computation unit operable to calculate, as the new public key $e'$, using the calculated remainder $d_p$ and the obtained prime $p$, an inverse of the remainder $d_p$ over a residue field with the prime $p$-1 as a modulus.

2.   The RSA public key generation apparatus of Claim 1, wherein
the remainder computation unit calculates the remainder $d_p$ according to an expression $d_p = d \pmod{p\text{-}1}$, and
the inverse computation unit calculates the public key $e'$ according to an expression $e' = d_p^{-1} \pmod{p\text{-}1}$.

3.   The RSA public key generation apparatus of Claim 1, wherein
the remainder computation unit and the inverse computation unit are together composed of one integrated circuit.

4.   An integrated circuit that composes an RSA public key generation apparatus that newly generates a public key $e'$ from an RSA cryptography private key $d$, the RSA public key generation apparatus including:

an obtaining unit operable to obtain the private key $d$ and a prime $p$, the private key $d$ being an inverse of a public key $e$ over a residue field with *lcm* as a modulus, the prime $p$ differing from a prime $q$, *lcm* being a least common multiple of $p$-1 and $q$- 1, and the public key $e$ being mutually relatively prime with *lcm* and satisfying an expression $p$-1>$e$, and
the integrated circuit comprising:

a remainder computation unit operable to calculate, using the obtained private key $d$ and the obtained prime $p$, a remainder $d_p$ of the private key $d$ with a prime $p$-1 as a modulus; and
an inverse computation unit operable to calculate, as the new public key $e'$, using the calculated remainder $d_p$ and the obtained prime $p$, an inverse of the remainder $d_p$ over a residue field with the prime $p$-1 as a modulus.

5.   An RSA decryption apparatus that decrypts a ciphertext generated according to RSA cryptography, comprising:

a public key obtaining unit operable to obtain the public key $e'$ from the RSA public key generation apparatus of Claim 1;
a ciphertext obtaining unit operable to obtain a ciphertext $C$, the ciphertext $C$ having been generated by RSA encrypting a plaintext $M$ according to RSA cryptography with use of the public key $e$;
an RSA decryption unit operable to RSA decrypt the obtained ciphertext $C$ with use of the private key $d$, thereby generating a deciphertext $D$;
a re-encryption unit operable to RSA encrypt the generated deciphertext $D$ using the obtained public key $e'$, thereby generating a re-ciphertext $C'$;
a comparison unit operable to compare the obtained ciphertext $C$ with the generated re-ciphertext $C'$ to determine whether the ciphertext $C$ and the re-ciphertext $C'$ are identical; and
an output unit operable to output the generated deciphertext $D$ when the ciphertext $C$ and the re-ciphertext $C'$

are determined to be identical.

**6.** The RSA decryption apparatus of Claim 5, wherein
the RSA decryption unit obtains the remainder $d_p$ from the RSA public key generation apparatus of Claim 1, and RSA decrypts the obtained ciphertext $C$ according to Chinese Remainder Theorem with use of the obtained remainder $d_p$, thereby generating the deciphertext D.

**7.** The RSA decryption apparatus of Claim 6, wherein
the RSA decryption unit generates the deciphertext $D$ by computing

$$a = p^{-1} \quad (\text{mod } q)$$

$$y_1 = C \quad (\text{mod } p)$$

$$y_2 = C \quad (\text{mod } q)$$

$$d_2 = d \quad (\text{mod } q\text{-}1)$$

$$x_1 = y_1^{dp} \quad (\text{mod } p)$$

$$x_2 = y_2^{d2} \quad (\text{mod } q)$$

$$D = \{a(x_2 - x_1)\,(\text{mod } q)\}\,p + x_1.$$

**8.** The RSA decryption apparatus of Claim 5, wherein
the output unit outputs a message indicating failure when the ciphertext $C$ and the re-ciphertext $C'$ are determined not to be identical.

**9.** The RSA decryption apparatus of Claim 5, wherein
the RSA decryption unit, the re-encryption unit, and the comparison unit are together composed of one integrated circuit.

**10.** An integrated circuit that composes an RSA decryption apparatus that decrypts a ciphertext generated according to RSA cryptography, the RSA decryption apparatus including:

a public key obtaining unit operable to obtain the public key $e'$ from the RSA public key generation apparatus of Claim 1;
a ciphertext obtaining unit operable to obtain a ciphertext $C$, the ciphertext $C$ having been generated by RSA encrypting a plaintext Maccording to RSA cryptography with use of the public key $e$; and
an output unit operable to output a deciphertext $D$ when the ciphertext $C$ and a re-ciphertext $C'$ are determined by a comparison unit to be identical, and
the integrated circuit comprising:

an RSA decryption unit operable to RSA decrypt the obtained ciphertext $C$ with use of the private key $d$, thereby generating the deciphertext $D$;
a re-encryption unit operable to RSA encrypt the generated deciphertext $D$ using the obtained public key $e'$, thereby generating the re-ciphertext $C'$; and
the comparison unit operable to compare the obtained ciphertext $C$ with the generated re-ciphertext $C'$ to determine whether the ciphertext $C$ and the re-ciphertext $C'$ are identical .

**11.** An RSA decryption apparatus that decrypts a ciphertext generated according to an RSA cryptography method, comprising:

an obtaining unit operable to obtain an RSA cryptography private key *d* and a prime *p*, the private key *d* being an inverse of a public key *e* over a residue field with *lcm* as a modulus, the prime *p* differing from a prime *q*, *lcm* being a least common multiple of *p*-1 and *q*-1, and the public key *e* being mutually relatively prime with *lcm* and satisfying an expression *p*-1>*e*;

a remainder computation unit operable to calculate, using the obtained private key *d* and the obtained prime *p*, a remainder $d_p$ of the private key *d* with a prime *p*-1 as a modulus;

an inverse computation unit operable to calculate, as a new public key *e'*, using the calculated remainder $d_p$ and the obtained prime *p*, an inverse of the remainder $d_p$ over a residue field with the prime *p*-1 as a modulus;

a ciphertext obtaining unit operable to obtain a ciphertext *C*, the ciphertext *C* having been generated by RSA encrypting a plaintext *M* according to RSA cryptography with use of the public key *e*;

an RSA decryption unit operable to RSA decrypt the obtained ciphertext *C* with use of the private key *d*, thereby generating a deciphertext *D*;

a re-encryption unit operable to RSA encrypt the generated deciphertext *D* using the obtained public key *e'*, thereby generating a re-ciphertext *C'*;

a comparison unit operable to compare the obtained ciphertext *C* with the generated re-ciphertext *C'* to determine whether the ciphertext *C* and the re-ciphertext *C'* are identical; and

an output unit operable to output the generated deciphertext *D* when the ciphertext *C* and the re-ciphertext *C'* are determined to be identical.

**12.** An RSA signature apparatus that generates a signature by applying a signature method to a plaintext according to RSA cryptography, comprising:

a public key obtaining unit operable to obtain the public key *e'* from the RSA public key generation apparatus of Claim 1;

a signature generation unit operable to apply an RSA signature to a plaintext *M* with use of the private key *d*, thereby generating a signature *S*;

a recovery unit operable to apply RSA signature recovery to the signature *S* with use of the obtained public key *e'*, thereby generating a deciphertext *D*;

a comparison unit operable to compare the plaintext *M* with the generated deciphertext *D* to determine whether the plaintext *M* and the deciphertext *D* are identical; and

an output unit operable to output the generated signature *S* when the plaintext *M* and the deciphertext *D* are determined to be identical.

**13.** The RSA signature apparatus of Claim 12, wherein

the signature generation unit obtains the remainder $d_p$ from the RSA public key generation apparatus of Claim 1, and applies the RSA signature to the plaintext *M* according to Chinese Remainder Theorem with use of the obtained remainder $d_p$, thereby generating the signature *S*.

**14.** The RSA decryption apparatus of Claim 13, wherein

the signature generation unit generates the signature *S* by computing

$$a = p^{-1} \pmod{q}$$

$$y_1 = M \pmod{p}$$

$$y_2 = M \pmod{q}$$

$$d_2 = d \pmod{q-1}$$

$$x_1 = y_1^{d_p} \pmod{p}$$

$$x_2 = y_2{}^{d2} \qquad (\text{mod } q)$$

$$S = \{a\,(x_2 - x_1)\,(\text{mod } q)\}\,p + x_1.$$

**15.** The RSA signature generation apparatus of Claim 12, wherein
the output unit outputs a message indicating failure when the plaintext $M$ and the deciphertext $D$ are determined not to be identical.

**16.** The RSA signature apparatus of Claim 12, wherein
the signature generation unit, the recovery unit, and the comparison unit are together composed of one integrated circuit.

**17.** An integrated circuit that composes an RSA signature apparatus that generates a signature by applying a signature method to a plaintext according to RSA cryptography, the RSA signature apparatus including:

a public key obtaining unit operable to obtain the public key $e'$ from the RSA public key generation apparatus of Claim 1; and
an output unit operable to output the generated signature $S$ when a plaintext $M$ and a deciphertext $D$ are determined by a comparison unit to be identical, and
the integrated circuit comprising:

a signature generation unit operable to apply an RSA signature to the plaintext $M$ with use of the private key $d$, thereby generating a signature $S$;
a recovery unit operable to apply RSA signature recovery to the signature $S$ with use of the obtained public key $e'$, thereby generating the deciphertext $D$; and
the comparison unit operable to compare the plaintext $M$ with the generated deciphertext $D$ to determine whether the plaintext $M$ and the deciphertext $D$ are identical.

**18.** An RSA signature apparatus that generates a signature by applying a signature to a plaintext according to an RSA signature method, comprising:

an obtaining unit operable to obtain an RSA cryptography private key d and a prime p, the private key d being an inverse of a public key $e$ over a residue field with $lcm$ as a modulus, the prime $p$ differing from a prime $q$, $lcm$ being a least common multiple of $p$-1 and $q$-1, and the public key $e$ being mutually relatively prime with $lcm$ and satisfying an expression $p$-1>$e$;
a remainder computation unit operable to calculate, using the obtained private key $d$ and the obtained prime $p$, a remainder $d_p$ of the private key $d$ with a prime $p$-1 as a modulus;
an inverse computation unit operable to calculate, as a new public key $e'$, using the calculated remainder $d_p$ and the obtained prime $p$, an inverse of the remainder $d_p$ over a residue field with the prime p-1 as a modulus;
a signature generation unit operable to apply an RSA signature to a plaintext $M$ with use of the private key $d$, thereby generating a signature $S$;
a recovery unit operable to apply RSA signature recovery to the signature $S$ with use of the obtained public key $e'$, thereby generating a deciphertext $D$;
a comparison unit operable to compare the plaintext $M$ with the generated deciphertext $D$ to determine whether the plaintext $M$ and the deciphertext $D$ are identical; and
an output unit operable to output the generated signature $S$ when the plaintext $M$ and the deciphertext $D$ are determined to be identical.

**19.** An RSA public key generation method used in an RSA public key generation apparatus that newly generates a public key $e'$ from an RSA cryptography private key $d$, the method comprising:

an obtaining step of obtaining the private key $d$ and a prime $p$, the private key $d$ being an inverse of a public key $e$ over a residue field with $lcm$ as a modulus, the prime $p$ differing from a prime $q$, $lcm$ being a least common multiple of $p$-1 and $q$-1, and the public key $e$ being mutually relatively prime with $lcm$ and satisfying an expression $p$-1>$e$;
a remainder computation step of calculating, using the obtained private key $d$ and the obtained prime $p$, a remainder $d_p$ of the private key $d$ with a prime $p$-1 as a modulus; and
an inverse computation step of calculating, as the new public key $e'$, using the calculated remainder $d_p$ and the obtained prime $p$, an inverse of the remainder $d_p$ over a residue field with the prime $p$-1 as a modulus.

20. A computer program that is for RSA public key generation and that is used in an RSA public key generation apparatus that newly generates a public key $e'$ from an RSA cryptography private key $d$, the computer program comprising:

an obtaining step of obtaining the private key $d$ and a prime $p$, the private key $d$ being an inverse of a public key $e$ over a residue field with $lcm$ as a modulus, the prime $p$ differing from a prime $q$, $lcm$ being a least common multiple of $p$-1 and $q$-1, and the public key $e$ being mutually relatively prime with $lcm$ and satisfying an expression $p$-1>$e$;
a remainder computation step of calculating, using the obtained private key $d$ and the obtained prime $p$, a remainder $d_p$ of the private key $d$ with a prime $p$-1 as a modulus; and
an inverse computation step of calculating, as the new public key $e'$, using the calculated remainder $d_p$ and the obtained prime $p$, an inverse of the remainder $d_p$ over a residue field with the prime $p$-1 as a modulus.

21. The computer program of Claim 20, recorded on a computer-readable recording medium.

22. The computer program of Claim 20, embodied in a carrier wave .

23. An RSA decryption method used in an RSA decryption apparatus that decrypts a ciphertext generated according to RSA cryptography, the method comprising:

a public key obtaining step of obtaining the public key e' from the RSA public key generation apparatus of Claim 1;
a ciphertext obtaining step of obtaining a ciphertext $C$, the ciphertext $C$ having been generated by RSA encrypting a plaintext $M$ according to RSA cryptography with use of the public key $e$;
an RSA decryption step of decrypting the obtained ciphertext $C$ with use of the private key $d$, thereby generating a deciphertext $D$;
a re-encryption step of RSA encrypting the generated deciphertext $D$ using the obtained public key $e'$, thereby generating a re-ciphertext $C'$;
a comparison step of comparing the obtained ciphertext $C$ with the generated re-ciphertext $C'$ to determine whether the ciphertext $C$ and the re-ciphertext $C'$ are identical; and
an output step of outputting the generated deciphertext $D$ when the ciphertext $C$ and the re-ciphertext $C'$ are determined to be identical.

24. A computer program that is for RSA decryption and that is used in an RSA decryption apparatus that decrypts a ciphertext generated according to RSA cryptography, the computer program comprising:

a public key obtaining step of obtaining the public key $e'$ from the RSA public key generation apparatus of Claim 1;
a ciphertext obtaining step of obtaining a ciphertext $C$, the ciphertext $C$ having been generated by RSA encrypting a plaintext $M$ according to RSA cryptography with use of the public key $e$;
an RSA decryption step of decrypting the obtained ciphertext $C$ with use of the private key $d$, thereby generating a deciphertext $D$;
a re-encryption step of RSA encrypting the generated deciphertext $D$ using the obtained public key $e'$, thereby generating a re-ciphertext $C'$;
a comparison step of comparing the obtained ciphertext $C$ with the generated re-ciphertext $C'$ to determine whether the ciphertext $C$ and the re-ciphertext $C'$ are identical; and
an output step of outputting the generated deciphertext $D$ when the ciphertext $C$ and the re-ciphertext $C'$ are determined to be identical.

25. The computer program of Claim 24, recorded on a computer-readable recording medium.

26. The computer program of Claim 24, embodied in a carrier wave.

27. An RSA signature method that generates a signature by applying a signature method to a plaintext according to RSA cryptography, the method comprising:

a public key obtaining step of obtaining the public key *e'* from the RSA public key generation apparatus of Claim 1;

a signature generation step of applying an RSA signature to a plaintext *M* with use of the private key *d*, thereby generating a signature *S*;

a recovery step of applying RSA signature recovery to the signature *S* with use of the obtained public key *e'*, thereby generating a deciphertext *D*;

a comparison step of comparing the plaintext *M* with the generated deciphertext *D* to determine whether the plaintext *M* and the deciphertext *D* are identical; and

an output step of outputting the generated signature *S* when the plaintext *M* and the deciphertext *D* are determined to be identical.

28. A computer program that is for RSA signature and that generates a signature by applying a signature method to a plaintext according to RSA cryptography, the computer program comprising:

a public key obtaining step of obtaining the public key e' from the RSA public key generation apparatus of Claim 1;

a signature generation step of applying an RSA signature to a plaintext *M* with use of the private key *d*, thereby generating a signature *S*;

a recovery step of applying RSA signature recovery to the signature *S* with use of the obtained public key *e'*, thereby generating a deciphertext *D*;

a comparison step of comparing the plaintext *M* with the generated deciphertext *D* to determine whether the plaintext *M* and the deciphertext *D* are identical; and

an output step of outputting the generated signature *S* when the plaintext *M* and the deciphertext *D* are determined to be identical.

29. The computer program of Claim 28, recorded on a computer-readable recording medium.

30. The computer program of Claim 28, embodied in a carrier wave.

FIG.1

SECRET COMMUNICATION SYSTEM

IC CARD
300

REGISTER APPARATUS
105

CARD READER
200

104

102
100
101

103

10

FIG.2

REGISTER APPARATUS 100

- DISPLAY UNIT 101
- DISPLAY UNIT 102
- PRINT UNIT 103
- INPUT UNIT 104
- CASH DRAWER 105
- CONTROL UNIT 107
- INFORMATION STORAGE UNIT 106
- ENCRYPTION/DECRYPTION UNIT 109
- AUTHENTICATION UNIT 108
- KEY STORAGE UNIT 111

| e | SK | p | q |
| --- | --- | --- | --- |

- INPUT/OUTPUT UNIT 110
- CARD READER 200

FIG.3

IC CARD 300

SYSTEM LSI 320

INPUT / OUTPUT UNIT 301

INFORMATION STORAGE UNIT 307

DECRYPTION UNIT 308

DECRYPTION UNIT 303

AUTHETNICATION UNIT 302

320

p,q,d

e'

RE-ENCRYPTION UNIT 306

CONTROL UNIT 305

KEY STORAGE UNIT 309

| PK | p | q | d |

n

PRIVATE KEY OBTAINING UNIT 311

p,d

p,q

d₁

e'

n

HIGH-SPEED PUBLIC KEY COMPUTATION UNIT 304

REMAINDER COMPUTATION UNIT 312

MODULUS COMPUTATION UNIT

p  d₁

n

INVERSE COMPUTATION UNIT 313

## FIG.4

| REGISTER APPARATUS | CARD READER | IC CARD |
|---|---|---|

PUBLIC KEY GENERATION

S101

$$d_1 = d \ (mod \ p-1)$$

S102

$$e_1 = d_1^{-1} \ (mod \ p-1)$$

S103

AUTHENTICATION OF IC CARD

S104

FAILURE — RESULT

SUCCESS

END

S105

AUTHENTICATION OF REGISTER APPARATUS

S106

RESULT — FAILURE

SUCCESS

END

S107

SESSION KEY TRANSFER

S108

SECRET COMMUNICATION

END     END     END

## FIG.5

START AUTHENTICATION OF IC CARD

| REGISTER APPARATUS | CARD READER | IC CARD |
|---|---|---|

S121

GENERATE RANDOM NUMBER $R_1$

RANDOM NUMBER $R_1$ — S122

S123

READ IC CARD PRIVATE KEY d AND n

S124

CALCULATE HASH VALUE $H_1 = Hash(R_1)$

GENERATE SIGNATURE DATA $S_1$

S125 — $a = p^{-1}(\text{mod } q)$

S126 — $y_1 = H_1(\text{mod } p)$

S127 — $y_2 = H_1(\text{mod } q)$

S128 — $d_2 = d(\text{mod } q-1)$

S129 — $x_1 = y_1^{d_1}(\text{mod } p)$

S130 — $x_2 = y_2^{d_2}(\text{mod } q)$

S131 — SIGNATURE DATA $S_1$ $= \{a(x_2 - x_1)(\text{mod } q)\}p + x_1$

## FIG.6

REGISTER APPARATUS     CARD READER     IC CARD

S132
OBTAIN IC CARD PUBLIC KEY e' AND n

S133
CALCULATE $S_1^{e'}$ (mod n)

S134
$H_1 : S_1^{e'}$(mod n) — NOT IDENTICAL

IDENTICAL

END

SIGNATURE DATA $S_1$

S141

S142
READ IC CARD PUBLIC KEY e, p, AND q

S143
CALCULATE HASH VALUE $H_2$
$H_2$=Hash($R_1$)

S144
CALCULATE $S_1^e$ (mod n)

S145
$H_2 : S_1^e$ (mod n) — NOT IDENTICAL

IDENTICAL

AUTHENTICATION SUCCESS     AUTHENTICATION FAILURE

# FIG.7

**START AUTHENTICATION OF REGISTER APPARATUS**

| REGISTER APPARATUS | CARD READER | IC CARD |
|---|---|---|

**S201** — GENERATE RANDOM NUMBER $R_2$

RANDOM NUMBER $R_2$ — S202

**S203** — READ REGISTER APPARATUS PRIVATE KEY SK, p, AND q

**S204** — CALCULATE HASH VALUE $H_3 = \mathrm{Hash}(R_2)$

**S205** — GENERATE SIGNATURE DATA $S_2 = (H_3)^{SK} (\mathrm{mod}\ n)$

SIGNATURE DATA $S_2$ — S206

**S207** — READ REGISTER APPARATUS PUBLIC KEY PK

**S208** — CALCULATE HASH VALUE $H_4$ $H_4 = \mathrm{Hash}(R_2)$

**S209** — CALCULATE $S_2^{PK} (\mathrm{mod}\ n)$

**S210** — $H_4 : S_2^{Pk} (\mathrm{mod}\ n)$

NOT IDENTICAL → AUTHENTICATION FAILURE

IDENTICAL → AUTHENTICATION SUCCESS

# FIG.8

$$\boxed{\text{START SESSION KEY TRANSFER}}$$

| REGISTER APPARATUS | CARD READER | IC CARD |
|---|---|---|

S251

GENERATE SESSION KEY M

S252

ENCRYPT SESSION KEY M
$C_1 = M^e \pmod{n}$

S253

ENCRYPTED SESSION KEY $C_1$

DECRYPT
CIPHERTEXT

$a = p^{-1} \pmod{q}$ — S256

$y_1 = C_1 \pmod{p}$ — S257

$y_2 = C_1 \pmod{q}$ — S258

$d_2 = d \pmod{q-1}$ — S259

$x_1 = y_1^{d_1} \pmod{p}$ — S260

$x_2 = y_2^{d_2} \pmod{q}$ — S261

DECRYPTED SESSION KEY
$x = \{a(x_2 - x_1) \pmod{q}\}p + x_1$ — S262

S263

OUTPUT SESSION KEY $x$

36

## FIG.9

START SECRET COMMUNICATION

REGISTER
APPARATUS     CARD READER     IC CARD

S291
GENERATE POINTS $P_t$

S292
ENCRYPTED POINTS $E_t$
$=E1$(SESSION KEY M, POINTS $P_t$)

ENCRYPTED
POINTS
S293

S294
DECRYPTED POINTS $D_t$
$=D1$(DECRYPTED SESSION KEY X,
ENCRYPTED POINTS $E_t$)

S295
STORE DECRYPTED POINTS $D_t$

FIG.10

RSA SECRET COMMUNICATION SYSTEM
20

400

420

404
DATA OUTPUT UNIT

402
DATA DECRYPTION UNIT

500
RSA ENCRYPTION APPARATUS

50

401
DATA INPUT UNIT

403
HIGH-SPEED PUBLIC KEY COMPUTATION UNIT

600
MEMORY CARD
| d | p | q |

406
DATA INPUT UNIT

411
PRIVATE KEY OBTAINING UNIT

412
REMAINDER COMPUTATION UNIT

414
INVERSE COMPUTATION UNIT

405
DATA RE-ENCRYPTION UNIT

413
MODULUS COMPUTATION UNIT

LSI UNIT

RSA DECRYPTION APPARATUS

# FIG.11

START

$\sim$S401

OBTAIN CIPHERTEXT C, PRIVATE KEY d,
PRIME p, AND PRIME q

$\sim$S402

CALCULATE PUBLIC KEY
$d_1=d \pmod{p-1}$
PUBLIC KEY $e_1=d_1^{-1} \pmod{p-1}$
$n=p \times q$

$\sim$S403

DECRYPTER CIPHERTEXT C USING
CHINESE REMAINDER THEOREM
$a=p^{-1} \pmod{q}$
$y_1=C \pmod{p}$
$y_2=C \pmod{q}$
$d_2=d \pmod{q-1}$
$x_1=y_1^{d_1} \pmod{p}$
$x_2=y_2^{d_2} \pmod{q}$
$D=\{a(x_2-x_1) \pmod{q}\} p+x_1$

$\sim$S404

RE-ENCRYPT GENERATED DECIPHER
TEXT D USING PUBLIC KEY $e_1$

$\sim$S405

RE-CIPHERTEXT C'
:CIPHERTEXT C

NOT IDENTICAL

IDENTICAL

$\sim$S406

OUTPUT DECIPHERTEXT D

$\sim$S407

DISPLAY MESSASGE

END

FIG.12

RSA SECRET COMMUNICATION SYSTEM

RSA DECRYPTION APPARATUS

LSI UNIT

HIGH-SPEED PUBLIC KEY COMPUTATION UNIT

RSA ENCRYPTION APPARATUS — 500

CRT INFORMATION GENERATION APPARATUS — 700

MEMORY CARD — 600b (d, p, q)

DATA INPUT UNIT — 401

DATA INPUT UNIT — 406b

DATA DECRYPTION UNIT — 402

PRIVATE KEY OBTAINING UNIT — 411b

INVERSE COMPUTATION UNIT — 414

MODULUS COMPUTATION UNIT — 413

DATA OUTPUT UNIT — 404

DATA RE-ENCRYPTION UNIT — 405

EP 1 531 579 A2

## FIG.13

START

CRT INFORMATION
GENERATION
APPARATUS     MEMORY CARD

RSA DECRYPTION
APPARATUS

p、q、d
S431

S432

$d_1 = d \pmod{p-1}$
$d_2 = d \pmod{q-1}$

RSA ENCRYPTION
APPARATUS

$d_1、d_2$          p、q、d、$d_1、d_2$     CIPHERTEXT C

S433          S434          S435

S436

DECRYPT CIPHERTEXT C USING
CHINESE REMAINDER THEOREM
$a = p^{-1} \pmod{q}$
$y_1 = C \pmod{p}$
$y_2 = C \pmod{q}$
$x_1 = y_1{}^{d_1} \pmod{p}$
$x_2 = y_2{}^{d_2} \pmod{q}$
$D = \{a(x_2 - x_1) \pmod{q}\}\, p + x_1$

S437

CALCULATE PUBLIC KEY $e_1$
$e_1 = d_1{}^{-1} \pmod{p-1}$
$n = p \times q$

S438

RE-ENCRYPT GENERATED
DECIPHERTEXT D USING PUBLIC KEY $e_1$

S439

NOT IDENTICAL

RE-CIPHERTEXT C'
:CIPHERTEXT C

S441

DISPLAY MESSAGE

IDENTICAL

S440

OUTPUT DECIPHERTEXT D

END